(19) Europäisches Patentamt
European Patent Office
Office européen des brevets

(11) EP 2 924 067 A1

(12) **EUROPÄISCHE PATENTANMELDUNG**

(43) Veröffentlichungstag:
**30.09.2015 Patentblatt 2015/40**

(21) Anmeldenummer: **14161762.1**

(22) Anmeldetag: **26.03.2014**

(51) Int Cl.:
***C08K 5/3492*** *(2006.01)* ***C08K 7/14*** *(2006.01)*
***C08K 7/20*** *(2006.01)* ***C08K 3/40*** *(2006.01)*
***C08L 77/02*** *(2006.01)* ***C08L 77/06*** *(2006.01)*
***C08K 3/22*** *(2006.01)*

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**
Benannte Erstreckungsstaaten:
**BA ME**

(71) Anmelder: **LANXESS Deutschland GmbH**
**50569 Köln (DE)**

(72) Erfinder:
- **Endtner, Jochen, Dr.**
**50679 Köln (DE)**
- **Bienmüller, Matthias, Dr.**
**47803 Krefeld (DE)**
- **Passeri, Fabio**
**22070 Albiolo (IT)**

(54) **Polyamidzusammensetzungen**

(57) Die vorliegende Erfindung betrifft Zusammensetzungen auf Basis von Polyamid 6 (PA 6) oder Polyamid 66 (PA 66) enthaltend Melamincyanurat, Titandioxid, Glasfasern und nicht-faserförmiges und nicht-geschäumtes gemahlenes Glas mit spezieller Teilchengrößenverteilung, Geometrie und gegebenenfalls Schlichte sowie die Herstellung und die Verwendung der erfindungsgemäßen Zusammensetzungen zur Herstellung von Erzeugnissen der Elektroindustrie, bevorzugt Elektrobauteilen, besonders bevorzugt zur Herstellung von FI-Schaltern und Leitungsschutzschaltern.

EP 2 924 067 A1

## Beschreibung

Die vorliegende Erfindung betrifft Zusammensetzungen auf Basis von Polyamid 6 (PA 6) oder Polyamid 66 (PA 66) enthaltend Melamincyanurat, Titandioxid, Glasfasern und nicht-faserförmiges und nicht-geschäumtes gemahlenes Glas mit spezieller Teilchengrößenverteilung, Geometrie und gegebenenfalls Schlichte sowie die Herstellung und die Verwendung der erfindungsgemäßen Zusammensetzungen zur Herstellung von Erzeugnissen der Elektroindustrie, bevorzugt Elektrobauteilen, besonders bevorzugt zur Herstellung von FI-Schaltern und Leitungsschutzschaltern.

Zur Modifizierung des Aufbereitungs-, Verarbeitungs- und Einsatzverhaltens sind Kunststoffe größtenteils mit Hilfsstoffen sowie mit Füll- und Verstärkungsstoffen versehen. Letztere verbessern Eigenschaften wie Steifigkeit, Festigkeit, Wärmestandfestigkeit, Maßhaltigkeit und verringern die thermische Ausdehnung von Erzeugnissen auf Basis von Kunststoffen.

Von besonderer Bedeutung für Kunststoff Zusammensetzungen sind Füll- und Verstärkungsstoffe aus Mineralien oder Glas, insbesondere Borsilikatglas oder Silikatglas, das in verschiedensten Formen, beispielsweise in Form von Glasfasern, Glasflocken oder auch in Form von Bläh- bzw. Schaumglas eingesetzt wird. Füll- und Verstärkungsstoffe haben einen wesentlichen Einfluss auf die Wärmeformbeständigkeit von Kunststoffen. So werden z.B. beim Einsatz von faserförmigen Füllstoffen mit entsprechend hohem Längen- zu Durchmesserverhältnis sehr gute Wärmeformbeständigkeiten erzielt. Allerdings führt die anistrope Geometrie einer Faser bei der Verarbeitung zu einer Ausrichtung der Fasern in Fließrichtung und damit einhergehend zu einer anistropen Schwindung während des Verarbeitens, was in der Folge zu unerwünschtem Verzug in den Erzeugnissen führt. Auch führt der mit den Fasern einhergehende "Dochteffekt" zu einer Verschlechterung der Selbstverlöschungseigenschaften dieser Erzeugnisse, wie sie beispielsweise im Glühdrahttest nach IEC 60695-2-12 (GWFI) von Bedeutung sind. Um auch mit faserförmigen Füllstoffen wie z.B. Glasfasern eine ausreichende Flammwidrigkeit von Kunststoff basierten Erzeugnissen sicherstellen zu können, muss man in der Regel Flammschutzmittel auf Halogen- oder Phosphorbasis einsetzen. Halogen basierte Flammschutzmittel stehen wegen ihrer Anreicherung in der Umwelt in der öffentlichen Diskussion. Phosphor basierte Flammschutzmittel werden gerne wegen der energieintensiven Herstellung vermieden. Zudem besteht bei Phosphor haltigen Flammschutzmitteln das Risiko von korrosiven Ablagerungen an elektrischen Kontakten, wenn es sich bei dem Erzeugnis um ein Elektrobauteil oder Elektronikbauteil handelt.

Bei Verwendung von nicht-faserförmigen Füllstoffen, insbesondere Talk, Tonmineralien, Glimmer, Bläh- oder Schaumglas, erhält man zwar in Erzeugnissen eine isotrope Schwindung, allerdings weisen diese Formmassen und die daraus herzustellenden Erzeugnisse dann häufig ungenügende Wärmeformbeständigkeiten (<130°C) oder unzureichende Selbstverlöschungseigenschaften in der GWFI-Prüfung bei dünneren Wandstärken (< 1 mm) auf.

EP 2468810 A1 Beispiel 3 beschreibt eine Polyamid basierte Zusammensetzung, die neben Melamincyanurat gemahlenes Glas und auch gemahlene Schnittglasfasern enthält. Nachteilig an dieser Zusammensetzung gemäß EP 2468810 A1 ist ihre schlechte Wärmeformbeständigkeit und damit einhergehend eine stark eingeschränkte Anwendbarkeit in elektrischen Bauteilen wie z.B. Leitungsschutzschaltern.

Nun ist aber gerade eine gute Wärmeformbeständigkeit bei gleichzeitig isotropem Schwindungsverhalten und gute Selbstverlöschungseigenschaften im GWFI-Test eine wichtige Voraussetzung für die Anwendung in komplex aufgebauten elektronischen Bauteilen, insbesondere in FI- Schaltern und in Leitungsschutzschaltern (FI = Fehlerstromschutzschalter).

Gemäß "http://de.wikipedia.org/wiki/Leitungsschutzschalter" ist ein Leitungsschutzschalter, kurz LS-Schalter, umgangssprachlich auch Sicherungsautomat oder kurz Sicherung genannt, eine Überstromschutzeinrichtung in der Elektroinstallation und wird in Niederspannungsnetzen eingesetzt. Als FI- Schalter bezeichnet man Fehlerstromschutzschalter (siehe: http://de.wikipedia.org/wiki/Fehlerstromschutzschalter).

Aufgabe der vorliegenden Erfindung war es daher, Polyamid basierte Zusammensetzungen zur Verfügung zu stellen, die zur Herstellung von Erzeugnissen für die Elektroindustrie geeignet sind, wobei sich diese Erzeugnisse durch hohe Wärmeformbeständigkeit bei gleichzeitig geringem isotropem Schwindungsverhalten und durch gute Selbstverlöschungseigenschaften im Glühdrahttest nach IEC60695-2-12 auch bei dünnen Wandstärken um 0,8 mm auszeichnen.

Gemäß "http://de.wikipedia.org/wiki/W%C3%A4rmeformbest%C3%A4ndigkeit" ist die Wärmeformbeständigkeit ein Maß für die Temperaturbelastbarkeit von Kunststoffen. Wegen deren viskoelastischen Materialverhaltens gibt es für Kunststoffe keine streng definierte obere Einsatztemperatur, stattdessen wird eine Ersatzgröße unter definierter Last bestimmt. Dazu stehen zwei genormte Methoden zur Verfügung, die Methode der Wärmeformbeständigkeitstemperatur (HDT) und die Vicat-Erweichungstemperatur (VST).

Die in DIN EN ISO 75-1,-2,-3 (Vorläufer: DIN 53461) beschriebene Methode der Wärmeformbeständigkeitstemperatur verwendet Standardprobekörper mit rechteckigem Querschnitt, die bevorzugt flachkant einer Dreipunktbiegung bei konstanter Last ausgesetzt werden. Je nach Probekörperhöhe wird dabei zur Erzielung einer sogenannten *Randfaserspannung* $\sigma_f$ von 1,80 (Methode A), 0,45 (Methode B) oder 8,00 N/mm$^2$ (Methode C) durch Gewichtsstücke oder/und Federn eine Kraft

$$F = \frac{2\sigma_f b h^2}{3L}$$

aufgebracht.

- b: Probenbreite
- h: Probenhöhe
- L: Auflagerabstand.

Anschließend werden die belasteten Proben einer Erwärmung mit konstanter Heizrate von 120 K/h (oder 50 K/h) ausgesetzt. Erreicht dabei die Durchbiegung der Probe eine Randfaserdehnung von 0,2 %, so ist die zugehörige Temperatur die Wärmeformbeständigkeitstemperatur HDT (engl. *heat deflection temperature* oder *heat distortion temperature).*

Die Vicat-Erweichungstemperatur (VST = *Vicat softening temperature)* nach DIN EN ISO 306 (Vorläufer: DIN 53460) wird mit einer Nadel (mit kreisrunder Fläche von 1 $mm^2$) gemessen. Diese ist mit einer Prüfkraft von 10 N (Prüfkraft A) oder 50 N (Prüfkraft B) belastet. Der Probekörper mit einer zulässigen Dicke von 3 bis 6,4 mm wird einer definierten Heizrate von 50 bzw. 120 K/h ausgesetzt. Die VST ist erreicht, wenn der Eindringkörper eine Eindringtiefe von 1 mm erreicht. Die Prüfung ist nach Norm nur bei Thermoplasten anzuwenden und gibt einen Aufschluss über die praktische Dauereinsatzgrenze, welche bei circa 15 K unter der Vicattemperatur liegt. Durch Variation der Randbedingungen ergeben sich vier Parameterkombinationen:

- VST/A50
- VST/A120
- VST/B50 (bevorzugte Methode für vergleichende Prüfungen (ISO 10350-1)
- VST/B120.

Gemäß "http://de.wikipedia.org/wiki/Schwindung#Schwindung_bei_Gie.C3.9Fharzen" ist Schwindung die Volumenänderung eines Materials oder Werkstückes, ohne dass Material entfernt oder Druck ausgeübt wird. Schwindung findet durch Trocknung, Abkühlung oder chemische bzw. physikalische Umbaumechanismen im Material statt. Eine geringe Schwindung bei Gießharzen auf Basis von Thermoplasten ist ein Qualitätskriterium, da ansonsten Einbauten unter Druckspannung geraten können und zu anderen zu benetzenden Teilen Spalte entstehen können, wenn die Haftung nicht ausreicht. Bei Spritzgusserzeugnissen der Elektrotechnik/Elektronik kann die Schwindung zum Eindringen von Feuchtigkeit und zu verringerter Spannungsfestigkeit führen. Unter isotroper Schwindung versteht der Fachmann eine Schwindung, die in alle Raumrichtungen hin gleich ist. Die Prüfung des Schwindungsverhaltens erfolgt gemäß DIN EN ISO 294-4, so auch im Rahmen der vorliegenden Erfindung.

Es wurde nun überraschend gefunden, dass Zusammensetzungen auf Basis von PA 6 oder PA 66 beim Einsatz von nicht-faserförmigem und nicht-geschäumtem, gemahlenem Glas in der unten näher beschriebenen Form in Kombination mit Glasfasern, Melamincyanurat und Titandioxid zu Elektro- bzw. Elektronikartikeln mit hervorragenden Eigenschaften in Bezug auf Wärmeformbeständigkeit, Flammwidrigkeit im Glühdrahttest nach IEC60695-2-12 und isotropem Schwindungsverhalten führen.

Gegenstand der Erfindung sind somit Zusammensetzungen, enthaltend

A) Polyamid 6 oder Polyamid 66,

B) nicht-faserförmiges und nicht-geschäumtes gemahlenes Glas mit einem d90 im Bereich von 5 bis 250 μm, bevorzugt im Bereich von 10 bis 150 μm, besonders bevorzugt im Bereich von 15 bis 80 μm, ganz besonders bevorzugt im Bereich von 16 bis 25 μm,

C) Glasfasern,

D) Melamincyanurat und

E) Titandioxid.

Zur Klarstellung sei angemerkt, dass vom Rahmen der vorliegenden Erfindung alle nachfolgend aufgeführten allgemeinen oder in Vorzugsbereichen genannten Definitionen und Parameter in beliebigen Kombinationen umfasst sind.
Bevorzugter Gegenstand der Erfindung sind Zusammensetzungen, enthaltend

A) 5 bis 92,8 Gew.-%, bevorzugt 20 bis 90 Gew.-%, besonders bevorzugt 30 bis 80 Gew.-% Polyamid 6 oder Polyamid 66,

B) 5 bis 80 Gew.-%, bevorzugt 10 bis 60 Gew.-%, besonders bevorzugt 15 bis 50 Gew.-% eines nicht-faserförmigen und nicht-geschäumten gemahlenen Glases mit einem d90 im Bereich von 5 bis 250 µm, bevorzugt im Bereich von 10 bis 150 µm, besonders bevorzugt im Bereich von 15 bis 80 µm, ganz besonders bevorzugt im Bereich von 16 bis 25 µm,

C) 2 bis 8 Gew.-%, bevorzugt 3 bis 7 Gew.-%, besonders bevorzugt 4 bis 6 Gew.-% Glasfasern,

D) 0,1 bis 40 Gew.-%, bevorzugt 1 bis 20 Gew.-% Melamincyanurat und

E) 0,1 bis 10 Gew.-%, bevorzugt 0,5 bis 5 Gew.-%, besonders bevorzugt 1 bis 2 Gew.-% Titandioxid

mit der Maßgabe, dass die Summe aller Gewichtsprozente stets 100 ergibt.
Die Zubereitung der erfindungsgemäßen Zusammensetzungen für eine weitere Nutzung erfolgt durch Mischen der als Edukte einzusetzenden Komponenten A) bis E) in wenigstens einem Mischwerkzeug. Hierdurch werden als Zwischenprodukte, auf den erfindungsgemäßen Zusammensetzungen basierende, Formmassen erhalten. Diese Formmassen können entweder ausschließlich aus den Komponenten A) bis E) bestehen, oder aber zusätzlich zu den Komponenten A) bis E) noch weitere Komponenten enthalten. In diesem Fall sind die Komponenten A) bis E) im Rahmen der angegebenen Mengenbereiche so zu variieren, dass die Summe aller Gewichtsprozente stets 100 ergibt.
In einer bevorzugten Ausführungsform ist das nicht-faserförmige nicht-geschäumte gemahlene Glas mit

B') mindestens einem Aminoalkyltrialkoxysilan, bevorzugt in Mengen von 0,01 Gew.-% bis 1,5 Gew.-% bezogen auf die Menge des nicht-faserförmigen und nicht-geschäumten gemahlenen Glases beschlichtet.

In einer Ausführungsform enthalten die Zusammensetzungen zusätzlich zu den Komponenten A), B), C), D) und E) beziehungsweise A), B), B'), C), D) und E) noch F) 0,01 bis 5 Gew.-%, ganz besonders bevorzugt 0,05 bis 3 Gew.-%, insbesondere bevorzugt 0,1 bis 2 Gew.-%, jeweils bezogen auf die Gesamtzusammensetzung, wenigstens eines **Gleit- und/oder Entformungsmittels,** wobei die übrigen Komponenten soweit reduziert werden, dass die Summe aller Gewichtsprozente stets 100 ergibt.
In einer Ausführungsform enthalten die Zusammensetzungen zusätzlich zu den Komponenten A) bis F) oder anstelle von F) noch G) 0,01 bis 10 Gew.-%, bevorzugt 0,1 bis 5 Gew.-%, besonders bevorzugt 0,5 bis 3,5 Gew.-%, jeweils bezogen auf die Gesamtzusammensetzung, wenigstens eines **Laserabsorbers** ausgewählt aus der Gruppe Antimontrioxid, Zinnoxid, Zinnorthophosphat, Bariumtitanat, Aluminiumoxid, Kupferhydroxyphosphat, Kupferorthophosphat, Kaliumkupferdiphosphat, Kupferhydroxid, Antimonzinnoxid, Bismuttrioxid und Antrachinon, wobei die übrigen Komponenten soweit reduziert werden, dass die Summe aller Gewichtsprozente stets 100 ergibt.
In einer Ausführungsform enthalten die Zusammensetzungen zusätzlich zu den Komponenten A) bis G) oder anstelle von F) und/oder G) noch H) 0,01 bis 60 Gew.-%, bevorzugt 1 bis 30 Gew. %, besonders bevorzugt 5 bis 25 Gew.-%, ganz besonders bevorzugt 0,01 bis 60 Gew.-%, jeweils bezogen auf die Gesamtzusammensetzung, wenigstens eines weiteren zum Melamincyanurat (= Komponente D)) unterschiedlichen **Flammschutzmittels,** wobei die übrigen Komponenten soweit reduziert werden, dass die Summe aller Gewichtsprozente stets 100 ergibt.
Erfindungsgemäß bevorzugt werden halogenfreie und/oder phosphorfreie Flammschutzmittel eingesetzt.
In einer Ausführungsform enthalten die Zusammensetzungen zusätzlich zu den Komponenten A) bis H) oder anstelle von F) und/oder G) und/oder H) noch die Komponente K) 0,01 bis 50 Gew.-%, bevorzugt 1 bis 30 Gew.-%, ganz besonders bevorzugt 2 bis 15 Gew.-%, insbesondere ganz besonders bevorzugt 2 bis 6 Gew.-%, jeweils bezogen auf die Gesamtzusammensetzung, wenigstens eines von den Komponenten B) und C) verschiedenen **Füllstoffs,** wobei die übrigen Komponenten soweit reduziert werden, dass die Summe aller Gewichtsprozente stets 100 ergibt.
In einer Ausführungsform enthalten die Zusammensetzungen zusätzlich zu den Komponenten A) bis K) oder anstelle der Komponenten F) und/oder G) und/oder H) und/oder K) noch L) 0,01 bis 20 Gew.-%, bevorzugt 0,05 bis 10 Gew.-%, ganz besonders bevorzugt 0,1 bis 5 Gew.-%, jeweils bezogen auf die Gesamtzusammensetzung, wenigstens eines **weiteren** von den Komponenten D) und E) unterschiedlichen **Additivs,** wobei die übrigen Komponenten soweit

reduziert werden, dass die Summe aller Gewichtsprozente stets 100 ergibt.

**Komponente A)**

Als Komponente A) enthalten die Zusammensetzungen PA 6 oder PA 66. Copolyamide auf Basis von PA 6 und/oder PA 66 werden vom Gegenstand der vorliegenden Erfindung mit umfasst.

Die im Rahmen der vorliegenden Anmeldung benutzte Kennzeichnung der Polyamide entspricht internationaler Norm, wobei die erste(n) Ziffer(n) die C-Atomzahl des Ausgangsdiamins und die letzte(n) Ziffer(n) die C-Atomzahl der Dicarbonsäure angeben. Wird nur eine Zahl angegeben, wie im Falle des PA6, so bedeutet dies, dass von einer $\alpha,\omega$-Aminocarbonsäure bzw. von dem davon abgeleiteten Lactam, im Falle des PA6 also dem $\varepsilon$-Caprolactam, ausgegangen worden ist; im Übrigen sei verwiesen auf H. Domininghaus, Die Kunststoffe und ihre Eigenschaften, Seiten 272 ff., VDI-Verlag, 1976.

Bevorzugt besitzt das als Komponente A) einzusetzende Polyamid 6 oder das Polyamid 66 eine Viskositätszahl bestimmt in einer 0,5 gew.-%igen Lösung in 96 gew.-%iger Schwefelsäure bei 25 °C gemäß ISO 307 im Bereich von 80 bis 180 ml/g.

Besonders bevorzugt besitzt das als Komponente A) einzusetzende Polyamid 6 nach der genannten Norm und nach dem oben genannten Verfahren eine Viskositätszahl im Bereich von 85 bis 160 ml/g, ganz besonders bevorzugt eine Viskositätszahl im Bereich von 90 bis 140 ml/g.

Das als Komponente A) einzusetzende Polyamid 66 besitzt nach dem oben genannten Verfahren besonders bevorzugt eine Viskositätszahl im Bereich von 110 bis 170 ml/g, ganz besonders bevorzugt eine Viskositätszahl im Bereich von 130 bis 160 ml/g.

Unter thermoplastischen Polyamiden werden in Anlehnung an Hans Domininghaus in "Die Kunststoffe und ihre Eigenschaften", 5. Auflage (1998), S. 14, Polyamide verstanden, deren Molekülketten keine oder auch mehr oder weniger lange und in der Anzahl unterschiedliche Seitenverzweigungen aufweisen, die in der Wärme erweichen und nahezu beliebig formbar sind.

Die erfindungsgemäß bevorzugten Polyamide können nach verschiedenen Verfahren hergestellt und aus sehr unterschiedlichen Bausteinen synthetisiert werden und im speziellen Anwendungsfall allein oder in Kombination mit Verarbeitungshilfsmitteln, Stabilisatoren oder auch polymeren Legierungspartnern, bevorzugt Elastomeren, zu Werkstoffen mit speziell eingestellten Eigenschaftskombinationen ausgerüstet werden. Geeignet sind auch Blends mit Anteilen von anderen Polymeren, bevorzugt von Polyethylen, Polypropylen, ABS, wobei ggf. ein oder mehrere Kompatibilisatoren eingesetzt werden können. Die Eigenschaften der Polyamide lassen sich durch Zusatz von Elastomeren verbessern, z. B. im Hinblick auf die Schlagzähigkeit. Die Vielzahl der Kombinationsmöglichkeiten ermöglicht eine sehr große Zahl von Produkten mit unterschiedlichsten Eigenschaften.

Zur Herstellung von Polyamiden sind eine Vielzahl von Verfahrensweisen bekannt geworden, wobei je nach gewünschtem Endprodukt unterschiedliche Monomerbausteine, verschiedene Kettenregler zur Einstellung eines angestrebten Molekulargewichtes oder auch Monomere mit reaktiven Gruppen für später beabsichtigte Nachbehandlungen eingesetzt werden.

Die technisch relevanten Verfahren zur Herstellung von Polyamiden laufen meist über die Polykondensation in der Schmelze. In Rahmen der vorliegenden Erfindung wird auch die hydrolytische Polymerisation von Lactamen als Polykondensation verstanden.

Bei den als Komponente A) einzusetzenden PA 6 und PA 66 handelt es sich um teilkristalline Polyamide. Teilkristalline Polyamide besitzen gemäß DE 10 2011 084 519 A1 eine Schmelzenthalpie im Bereich von 4 bis 25 J/g, gemessen mit der DSC-Methode gemäß ISO 11357 beim 2. Aufheizen und Integration des Schmelzpeaks. Im Gegensatz dazu besitzen amorphe Polyamide eine Schmelzenthalpie von weniger als 4 J/g, gemessen mit der DSC-Methode gemäß ISO 11357 beim 2. Aufheizen und Integration des Schmelzpeaks.

Erfindungsgemäß als Komponente A) bevorzugt einzusetzende Polyamide oder Copolyamide sind solche, die ausgehend von Diaminen und Dicarbonsäuren und/oder Lactamen mit wenigstens 5 Ringgliedern oder entsprechenden Aminosäuren hergestellt werden. Als Edukte kommen bevorzugt aliphatische Dicarbonsäuren, besonders bevorzugt Adipinsäure, aliphatische Diamine, besonders bevorzugt Hexamethylendiamin, Aminocarbonsäuren, insbesondere Aminocapronsäure, oder die entsprechenden Lactame in Betracht. Copolyamide aus mehreren der genannten Monomeren sind eingeschlossen.

Das als Komponente A) bevorzugt einzusetzende Polyamid 6 ist erhältlich aus $\varepsilon$ Caprolactam. Das als Komponente A) bevorzugt einzusetzende Polyamid 66 ist erhältlich aus Hexamethylendiamin und Adipinsäure.

Bevorzugt sind weiterhin die meisten auf PA 6, PA 66 bzw. auf deren Copolyamiden basierende Compounds, bei denen auf eine Polyamidgruppe in der Polymerkette 3 bis 11 Methylengruppen, insbesondere ganz besonders bevorzugt 4 bis 6 Methylengruppen kommen.

**Komponente B)**

Als Komponente B) enthalten die Zusammensetzungen nicht-faserförmiges und nicht-geschäumtes gemahlenes Glas mit einer Teilchengrößenverteilung, die einen d90 im Bereich von 5 bis 250 μm, bevorzugt im Bereich von 10 bis 150 μm, besonders bevorzugt im Bereich von 15 bis 80 μm, ganz besonders bevorzugt im Bereich von 16 bis 25 μm aufweist. Hierbei wird bevorzugt nicht-faserförmiges und nicht-geschäumtes gemahlenes Glas eingesetzt, das zudem einen d10 im Bereich von 0,3 bis 10 μm, bevorzugt im Bereich von 0,5 bis 6 μm, besonders bevorzugt im Bereich von 0,7 bis 3 μmaufweist. Dabei ist solches nicht-faserförmiges und nicht-geschäumtes gemahlenes Glas ganz besonders bevorzugt, das ferner einen d50 im Bereich von 3 bis 50 μm, bevorzugt im Bereich von 4 bis 40 μm, besonders bevorzugt im Bereich von 5 bis 30 μm aufweist.

Bezüglich der d10, d50 und d90-Werte, ihrer Bestimmung und ihrer Bedeutung sei auf Chemie Ingenieur Technik (72) S. 273-276, 3/2000, Wiley-VCH Verlags GmbH, Weinheim, 2000 verwiesen, wonach der

d10-Wert diejenige Partikelgröße ist, unterhalb derer 10 % der Partikelmenge liegen, d50-Wert diejenige Partikelgröße ist, unterhalb derer 50 % der Partikelmenge liegen (Medianwert) und der d90-Wert diejenige Partikelgröße ist, unterhalb derer 90 % der Partikelmenge liegen.

Bevorzugt weist ein erfindungsgemäß einzusetzendes nicht-faserförmiges und nicht-geschäumtes gemahlenes Glas eine mittlere Teilchengröße im Bereich von 3 bis 60 μm, insbesondere bevorzugt im Bereich von 15 bis 30 μm auf. Die Angaben der Teilchengrößenverteilung bzw. der Teilchengrößen beziehen sich hierbei auf sogenannte oberflächenbasierte Teilchengrößen, jeweils vor Einarbeitung in die thermoplastische Formmasse. Hierbei werden die Durchmesser der Flächen der jeweiligen Glaspartikel mit den Flächen imaginärer sphärischer Teilchen (Kugeln) in Beziehung gesetzt. Dies geschieht mit einem nach dem Prinzip der Laserverdunklung arbeitenden Teilchengrößenanalysator der Fa. Ankersmid (Eye Tech® mit der darin enthaltender EyeTech®-Software und ACM-104 Messzelle, Ankersmid Lab, Oosterhout, Niederlande).

Erfindungsgemäß bevorzugt ist das nicht-faserförmige und nicht-geschäumte gemahlene Glas von partikelförmiger, nicht zylindrischer Gestalt und hat ein Längen- zu Dickenverhältnis kleiner 5, bevorzugt kleiner als 3, besonders bevorzugt kleiner 2. Der Wert Null ist selbstverständlich ausgeschlossen.

Zur Abgrenzung von der vorliegenden Erfindung wird unter geschäumtem Glas, häufig auch Blähglas genannt, ein Glas verstanden, in dem Gasbläschen beispielsweise aus Luft oder Kohlendioxid eingeschlossen sind. Dieser Einschluss von Gas führt jedoch im Gegensatz zu dem erfindungsgemäß einzusetzenden nicht-geschäumten Glas zu einer Verringerung der Dichte. Das erfindungsgemäß einzusetzende nicht-geschäumte und nicht-faserförmige gemahlene Glas erfährt also keine Dichte-Verringerung durch etwaige Gaseinschlüsse.

Zur Abgrenzung von der vorliegenden Erfindung wird unter faserförmigem Glas eine Glasgeometrie mit zylindrischem oder ovalen Querschnitt verstanden, die ein Längen- zu Durchmesserverhältnis (L/D-Verhältnis) größer 5 aufweist. Das als Komponente B) einzusetzende nicht-geschäumte und nicht faserförmige gemahlene Glas ist deshalb zudem dadurch gekennzeichnet, dass es nicht die für faserförmiges Glas typische Glasgeometrie mit zylindrischem oder ovalen Querschnitt mit einem Längen- zu Durchmesserverhältnis (L/D-Verhältnis) größer 5 aufweist.

Das erfindungsgemäß einzusetzende nicht-geschäumte und nicht-faserförmige gemahlene Glas wird bevorzugt durch Mahlung von Glas mit einer Mühle, bevorzugt einer Kugelmühle und besonders bevorzugt mit anschließender Sichtung bzw. Siebung erhalten. Als Ausgangsmaterial kommen alle geometrischen Formen von erstarrtem Glas in Betracht.

Bevorzugte Ausgangsmaterialien für die Vermahlung zu erfindungsgemäß einzusetzendem nicht-faserförmigem und nicht-geschäumtem gemahlenem Glas sind auch Glasabfälle, wie sie insbesondere bei der Herstellung von Glaserzeugnissen als unerwünschtes Nebenprodukt und / oder als nicht spezifikationsgerechtes Hauptprodukt (sogenannte Offspec-Ware) anfallen. Hierzu gehört insbesondere Abfall-, Recycling- und Bruchglas wie es insbesondere bei der Herstellung von Fenster- oder Flaschenglas, sowie bei der Herstellung von glashaltigen Füll- und Verstärkungsstoffen, insbesondere in Form von sogenannten Schmelzekuchen, anfallen kann. Das Glas kann gefärbt sein, wobei nichtgefärbtes Glas als Ausgangsmaterial bevorzugt ist.

Als Ausgangsglas für die Vermahlung kommen prinzipiell alle Glasarten in Betracht wie sie z.B. in DIN1259-1 beschrieben sind. Bevorzugt sind Kalk-Natron-Glas, Floatglas, Quarzglas, Bleikristallglas, Borsilikatglas, A-Glas und E-Glas, wobei Kalk-Natron-Glas, Borsilikatglas, A-Glas und E-Glas besonders bevorzugt sind, A-Glas und E-Glas ganz besonders bevorzugt sind und E-Glas insbesondere bevorzugt ist. Bezüglich physikalischer Daten und Zusammensetzung von E-Glas sei auf "http://wiki.r-g.de/index.php?title=Glasfasern" verwiesen. Erfindungsgemäß insbesondere bevorzugt einzusetzendes nicht-faserförmiges und nicht-geschäumtes gemahlenes E-Glas zeichnet sich durch wenigstens eines der nachfolgend in Tabelle 1 genannten Merkmale aus:

**Tabelle 1**

| **Eigenschaften E-Glas** | **Einheit** | **E-Glas** |
|---|---|---|
| Dichte | $g/cm^2$ bei 20 °C | 2,6 |
| Zugfestigkeit | MPa | 3400 |
| Zug_E-Modul | GPa | 73 |
| Bruchdehnung | % | 3,5-4 |
| **Chemische Zusammensetzung** | **Einheit** | **Wert** |
| $SiO_2$ | % | 53-55 |
| $Al_2O_3$ | % | 14-15 |
| $B_2O_3$ | % | 6-8 |
| CaO | % | 17-22 |
| MgO | % | <5 |
| $K_2O$, $Na_2O$ | % | <1 |
| Andere Oxide | % | ca.1 |

Ebenfalls besonders bevorzugt für die Herstellung des erfindungsgemäß einzusetzenden nicht-geschäumten und nicht-faserförmigen Glases sind Glasarten, bei denen der Gehalt an $K_2O$ kleiner oder gleich 2 Gew.-% bezogen auf alle Komponenten des Glases ist. Das erfindungsgemäß einzusetzende nicht-geschäumte und nicht-faserförmige gemahlene Glas kann beispielsweise von der Firma VitroMinerals, Covington, GA, USA bezogen werden. Es wird als sogenanntes CS Glass Powder in den Spezifikationen CS-325, CS-500 und CS-600 oder auch als LA400 angeboten. (siehe auch "www.glassfillers.com" oder Chris DeArmitt, Additives Feature, Mineral Fillers , COMPOUNDING WORLD, Februar 2011, Seiten 28-38 bzw. "www.compoundingworld.com").

Komponente B) hat bevorzugt eine Dichte (nicht Schüttdichte !) nach ASTM C 693 im Bereich von 2400 bis 2700 $kg/m^3$, besonders bevorzugt im Bereich von 2400 bis 2600 $kg/m^3$ und unterscheidet sich damit deutlich von Schaumglas (Dichte = 100 - 165 $kg/m^3$) Schaumglas Granulat (Dichte = 130 - 170 $kg/m^3$) und Blähglas (Dichte = 110 - 360 $kg/m^3$) siehe auch AGY Produktbroschüre Pub. No. LIT-2006-111 R2 (02/06).

Erfindungsgemäß bevorzugt ist das einzusetzende nicht-geschäumte und nicht-faserförmige gemahlene Glas mit einer Oberflächenmodifizierung oder Schlichte (Komponente B') auf Basis von Aminoalkyltrialkoxysilan versehen. In alternativen oder bevorzugten Ausführungsformen kann das nicht-geschäumte und nicht-faserförmige gemahlene Glas mit zusätzlicher Oberflächenmodifizierung oder Schlichte auf Silan- bzw. Siloxanbasis versehen sein, bevorzugt mit Glycidyl-, Carboxyl, Alkenyl-, Acryloxyalkyl- und/oder Methacryloxyalkyl- funktionalisierten Trialkoxysilanen oder deren wässriger Hydrolysate sowie Kombinationen daraus.

Bevorzugte Aminoalkyltrialkoxysilane sind Aminopropyltrimethoxysilan, Aminobutyltrimethoxysilan, Aminopropyltriethoxysilan, Aminobutyltriethoxysilan oder deren wässrige Hydrolysate, wobei Aminopropyltriethoxysilan insbesondere ganz besonders bevorzugt ist.

Die Aminoalkyltrialkoxysilane werden bevorzugt in Mengen von 0,01 Gew.-% bis 1,5 Gew.-%, besonders bevorzugt in Mengen von 0,05 Gew.-% bis 1,0 Gew.-% und ganz besonders bevorzugt in Mengen von 0,1 Gew.-% bis 0,5 Gew.-% bezogen auf das nicht-geschäumte und nicht-faserförmige gemahlene Glas B) zur Oberflächenbeschichtung eingesetzt.

Das Ausgangsglas für die Vermahlung kann bereits mit Oberflächenmodifizierung oder Schlichte behandelt sein. Ebenso kann das erfindungsgemäß einzusetzende nicht-geschäumte und nicht-faserförmige gemahlene Glas nach der Vermahlung mit Oberflächenmodifizierung oder Schlichte behandelt werden.

Insbesondere kann MF7900 der Lanxess Deutschland GmbH, Köln, eingesetzt werden, ein nicht-faserförmiges und nicht-geschäumtes gemahlenes Glas auf Basis E-Glas enthaltend ca. 0,1 Gew.-% mit einem d90 von 54 $\mu$m, einem d50 von 14 $\mu$m, einem d10 von 2,4 $\mu$mund einer mittleren Teilchengröße von 21 $\mu$m, jeweils bezogen auf die Teilchenoberfläche, enthaltend ca. 0,1 Gew.-% Triethoxy(3-aminopropyl)silan-Schlichte.

Das erfindungsgemäß einzusetzende nicht-geschäumte und nicht-faserförmige gemahlene Glas kann bedingt durch die Verarbeitung zur erfindungsgemäßen Zusammensetzung bzw. zu Erzeugnissen aus der erfindungsgemäßen Zusammensetzung bzw. im Erzeugnis einen kleineren d90- bzw. d50-Wert bzw. d10-Wert bzw. eine kleinere mittlere Teilchengröße aufweisen, als die ursprünglich eingesetzten gemahlenen Partikel.

**Komponente C)**

Gemäß "http://de.wikipedia.org/wiki/Faser-Kunststoff-Verbund" unterscheidet man geschnittene Fasern, auch als Kurzfasern bezeichnet, mit einer Länge im Bereich von 0,1 bis 1 mm, Langfasern mit einer Länge im Bereich von 1 bis 50 mm und Endlosfasern mit einer Länge L > 50 mm. Kurzfasern werden in der Spritzgusstechnik eingesetzt und können direkt mit einem Extruder verarbeitet werden. Langfasern können ebenfalls noch in Extrudern verarbeitet werden. Sie finden im großen Umfang Einsatz beim Faserspritzen. Langfasern werden häufig Duroplasten als Füllstoff zugemischt. Endlosfasern werden als Rovings oder Gewebe in faserverstärkten Kunststoffen eingesetzt. Erzeugnisse mit Endlosfasern erzielen die höchsten Steifigkeits- und Festigkeitswerte. Des Weiteren werden gemahlene Glasfasern angeboten, deren Länge nach der Vermahlung typischerweise im Bereich von 70 bis 200 μm liegt.
Bevorzugt werden für Komponente C) Endlosglasfasern oder geschnittene Langglasfasern mit den oben für Fasern angegebenen Längen eingesetzt.
Erfindungsgemäß besonders bevorzugt werden für Komponente C) geschnittene Langglasfasern mit einer Ausgangslänge im Bereich von 1 bis 50 mm, besonders bevorzugt im Bereich von 1 bis 10 mm, ganz besonders bevorzugt im Bereich von 2 bis 7 mm eingesetzt. Die Glasfasern der Komponente C) können bedingt durch die Verarbeitung zur Formmasse oder zum Erzeugnis in der Formmasse oder im Erzeugnis einen kleineren d97- bzw. d50-Wert aufweisen, als die ursprünglich eingesetzten Glasfasern. So liegt der arithmetische Mittelwert der Glasfaserlänge nach der Verarbeitung häufig nur noch im Bereich von 150 μm bis 300 μm.
Bevorzugt als Komponente C) einzusetzende Glasfasern haben einen Faserdurchmesser im Bereich von 7 bis 18 μm, besonders bevorzugt im Bereich von 9 bis 15 μm. Die Glasfasern der Komponente C) werden in einer bevorzugten Ausführungsform mit einem geeigneten Schlichtesystem oder einem Haftvermittler bzw. Haftvermittlersystem ausgerüstet. Bevorzugt wird ein Schlichtesystem bzw. ein Haftvermittler auf Silanbasis eingesetzt.
Besonders bevorzugte Haftvermittler auf Silanbasis für die Vorbehandlung sind Silanverbindungen der allgemeine Formel (I)

$$(X\text{-}(CH_2)_q)k\text{-}Si\text{-}(O\text{-}CrH_{2r+1})4\text{-}k \qquad \text{(I)}$$

worin
X für $NH_2$-, Carboxyl-, HO- oder

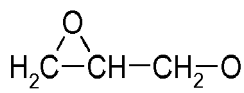

steht,
q für eine ganze Zahl von 2 bis 10, bevorzugt 3 bis 4 steht,
r für eine ganze Zahl von 1 bis 5, bevorzugt 1 bis 2 steht und
k für eine ganze Zahl von 1 bis 3, bevorzugt 1 steht.
Insbesondere bevorzugte Haftvermittler sind Silanverbindungen aus der Gruppe Aminopropyltrimethoxysilan, Aminobutyltrimethoxysilan, Aminopropyltriethoxysilan, Aminobutyltriethoxysilan sowie die entsprechenden Silane, welche als Substituent X eine Glycidyl- oder eine Carboxylgruppe enthalten, wobei Carboxylgruppen insbesondere ganz besonders bevorzugt sind.
Für die Ausrüstung der als Komponente C) einzusetzenden Glasfasern wird der Haftvermittler, bevorzugt die Silanverbindungen gemäß Formel (I), bevorzugt in Mengen von 0,05 bis 2 Gew.-%, besonders bevorzugt in Mengen von 0,25 bis 1,5 Gew.-% und ganz besonders bevorzugt in Mengen von 0,5 bis 1 Gew.-%, jeweils bezogen auf 100 Gew.-% Komponente C), eingesetzt.
Gemäß "http://www.r-g.de/wiki/Glasfasern" werden Glasfasern im Schmelzspinnverfahren (Düsenzieh-, Stabzieh- und Düsenblasverfahren) hergestellt. Beim Düsenziehverfahren fließt unter Ausnutzung der Schwerkraft die heiße Glasmasse durch hunderte Düsenbohrungen einer Platinspinnplatte. Die Elementarfäden können in unbegrenzter Länge mit einer Geschwindigkeit von 3 - 4 km/Minute gezogen werden.
Der Fachmann unterscheidet verschiedene Glasfasersorten, wovon hier beispielsweise einige gelistet sind:

- E-Glas, das meistverwendete Material mit optimalem Preis-Leistungsverhältnis (E-Glas von R&G)
- H-Glas, Hohlglasfasern für reduziertes Gewicht (R&G Glashohlfasergewebe 160 g/$m^2$ und 216 g/$m^2$)
- R, S-Glas, für erhöhte mechanische Anforderungen (S2-Glas von R&G)
- D-Glas, Borsilicatglas für erhöhte elektrische Anforderungen
- C-Glas, mit erhöhter chemischer Widerstandsfähigkeit
- Quarzglas, mit hoher Temperaturbeständigkeit

Weitere Beispiele finden sich unter "http://de.wikipedia.org/wiki/Giasfaser". Für die Kunststoffverstärkung haben E-Glasfasern die größte Bedeutung erlangt. E steht für Elektro-Glas, da es ursprünglich vor allem in der Elektroindustrie eingesetzt wurde. Für die Produktion von E-Glas werden Glasschmelzen aus reinem Quarz mit Zusätzen aus Kalkstein, Kaolin und Borsäure hergestellt. Sie enthalten neben Siliziumdioxid unterschiedliche Mengen verschiedener Metalloxide. Die Zusammensetzung bestimmt die Eigenschaften der Produkte. Erfindungsgemäß bevorzugt wird wenigstens eine Sorte Glasfasern aus der Gruppe E-Glas, H-Glas, R,S-Glas, D-Glas, C-Glas und Quarzglase eingesetzt, besonders bevorzugt Glasfasern aus E-Glas.

Glasfasern aus E-Glas sind der am weitesten verbreitete Verstärkungswerkstoff. Die Festigkeitseigenschaften entsprechen denen von Metallen (z.B. Alu-Legierungen), wobei das spezifische Gewicht von Laminaten niedriger ist, als das der Metalle. E-Glasfasern sind unbrennbar, hitzefest bis ca. 400 °C und beständig gegen die meisten Chemikalien und Witterungseinflüsse.

**Komponente D)**

Als Komponente D) enthalten die erfindungsgemäßen Zusammensetzungen Melamincyanurat [CAS No. 37640-57-6]. Unter Melamincyanurat versteht man das Reaktionsprodukt aus vorzugsweise äquimolaren Mengen von Melamin und Cyanursäure bzw. Isocyanursäure. Hierzu zählen u.a. sämtliche handelsüblichen und kommerziell verfügbaren Produktqualitäten. Beispiele hierfür sind u.a. Melapur® MC 25 und Melapur® MC50 (Fa. BASF, Ludwigshafen, Deutschland). Das erfindungsgemäß einzusetzende Melamincyanurat besteht bevorzugt aus Partikeln mit mittleren Teilchendurchmessern von 0,1 μm bis 100 μm, besonders bevorzugt von 0,1 μm bis 30 μm, ganz besonders bevorzugt 0,1 μm bis 7 μm und kann oberflächenbehandelt bzw. mit bekannten Mitteln beschichtet bzw. beschlichtet sein. Hierzu zählen bevorzugt organische Verbindungen, die in monomerer, oligomerer und/ oder polymerer Form auf das Melamincyanurat aufgebracht sein können. Insbesondere bevorzugt können Beschichtungssysteme verwendet werden, die auf Silizium-haltigen Verbindungen, insbesondere organofunktionalisierten Silanen oder Organosiloxanen basieren. Beschichtungen mit anorganischen Komponenten sind ebenfalls möglich.

**Komponente E)**

Das als Komponente E) einzusetzende Titandioxid [CAS No. 13463-67-7] hat bevorzugt eine mittlere Teilchengröße im Bereich von 90 nm bis 2000 nm. Für das erfindungsgemäß als Komponente E) einzusetzende Titandioxid kommen Titandioxid-Pigmente in Frage, deren Grundkörper nach dem Sulfat (SP)- oder Chlorid (CP)-Verfahren hergestellt sein können und die Anatas und / oder Rutilstruktur, bevorzugt Rutilstruktur haben. Der Grundkörper muss nicht stabilisiert sein, jedoch ist eine spezielle Stabilisierung bevorzugt: beim CP-Grundkörper durch eine Al- Dotierung von 0,3-3,0 Gew.-% (gerechnet als $Al_2O_3$) und einen Sauerstoffüberschuss in der Gasphase bei der Oxidation des Titantetrachlorids zu Titandioxid von mindestens 2 %; beim SP-Grundkörper durch eine Dotierung bevorzugt mit Al, Sb, Nb oder Zn. Besonders bevorzugt ist eine "leichte" Stabilisierung mit Al, bzw. bei höheren Al-Dotierungsmengen eine Kompensation mit Antimon. Bei der Verwendung von Titandioxid als Weißpigment in Farben und Lacken, Kunststoffen usw. ist bekannt, dass durch UV-Absorption erzeugte unerwünschte fotokatalytische Reaktionen zur Zersetzung des pigmentierten Materials führen. Dabei absorbieren Titandioxid-Pigmente im nahen ultravioletten Bereich Licht, so dass Elektron-Loch-Paare entstehen, welche hochreaktive Radikale auf der Titandioxid-Oberfläche erzeugen. Die gebildeten Radikale haben in organischen Medien einen Bindemittelabbau zur Folge. Erfindungsgemäß bevorzugt wird zur Erniedrigung der Fotoaktivität des Titandioxids dieses anorganisch nachbehandelt, besonders bevorzugt mit Oxiden von Si und / oder Al und / oder Zr und/oder durch den Einsatz von Sn-Verbindungen.

Bevorzugt ist die Oberfläche von pigmentärem Titandioxid mit amorphen Ausfällungen von Oxidhydraten der Verbindungen $SiO_2$ und/oder $Al_2O_3$ und / oder Zirkonoxid bedeckt. Die $Al_2O_3$-Hülle erleichtert die Pigmentdispergierung in der Polymermartrix, die $SiO_2$-Hülle erschwert den Ladungsaustausch an der Pigmentoberfläche und verhindert dadurch den Polymerabbau.

Erfindungsgemäß wird das Titandioxid bevorzugt mit hydrophilen und/oder hydrophoben organischen Beschichtungen versehen, insbesondere mit Siloxanen oder Polyalkoholen.

Erfindungsgemäß als Komponente E) einzusetzendes Titandioxid weist bevorzugt eine mittlere Teilchengröße im Bereich von 90 nm und 2000 nm, bevorzugt im Bereich von 200 nm und 800 nm auf.

Kommerziell erhältliche Produkte sind beispielsweise Kronos® 2230, Kronos® 2225 und Kronos® vlp7000 der Fa. Kronos, Dallas, USA.

Das Titandioxid kann direkt als Pulver oder in Form von Masterbatchen eingesetzt werden, wobei im Falle von Masterbatchen die Masterbatche auf Basis von Polyamid bevorzugt sind. Alternativ können auch Titandioxid Masterbatche auf Basis von Polycarbonat, Polybutylenterephthalat, Polyethylen, Maleinsäureanhydrid-gepfropftem Polyethylen und/oder Maleinsäureanhydrid gepfropftem-Polypropylen verwendet werden, wobei auch eine Mischung der genannten Polymere für den Masterbatch verwendet werden kann.

In einer Ausführungsform betrifft die Erfindung Zusammensetzungen worin auf Komponente E) Titandioxid verzichtet wird, wenn als Komponente C) Endlosfasern mit einer Ausgangslänge L > 50 mm eingesetzt werden.

**Komponente F)**

Die in einer bevorzugten Ausführungsform der erfindungsgemäßen Zusammensetzungen als Komponente F) einzusetzenden Gleit- und/oder Entformungsmittel sind bevorzugt langkettige Fettsäuren, insbesondere Stearinsäure oder Behensäure, deren Salze, insbesondere Ca- oder Zn-Stearat, sowie deren Esterderivate oder Amidderivate, insbesondere Ethylen-bis-stearylamid, Montanwachse sowie niedermolekulare Polyethylen- bzw. Polypropylenwachse.

Montanwachse im Sinne der vorliegenden Erfindung sind Mischungen aus geradkettigen, gesättigten Carbonsäuren mit Kettenlängen von 28 bis 32 C-Atomen. Erfindungsgemäß werden besonders bevorzugt Gleit- und/oder Entformungsmittel aus der Gruppe der Ester, oder Amide gesättigter oder ungesättigter aliphatischer Carbonsäuren mit 8 bis 40 C-Atomen mit aliphatischen gesättigten Alkoholen oder Aminen mit 2 bis 40 C-Atomen sowie Metallsalze gesättigter oder ungesättigter aliphatischer Carbonsäuren mit 8 bis 40 C-Atomen eingesetzt. Ganz besonders bevorzugt wird wenigstens ein Gleit- und/oder Entformungsmittel aus der Gruppe Ethylen-bis-stearylamid, Calciumstearat und Ethylenglycoldimontanat eingesetzt.

Insbesondere bevorzugt wird Calciumstearat [CAS No. 1592-23-0] oder Ethylen-bis-stearylamid [CAS No 110-30-5] eingesetzt.

Insbesondere besonders bevorzugt wird Ethylen-bis-stearylamid (Loxiol® EBS von Emery Oleochemicals) eingesetzt.

**Komponente G)**

Als Komponente G) wird wenigstens ein Laserabsorber eingesetzt. Gemäß Kunststoffe 8, 2008, 119 - 121 handelt es sich dabei um Laserlicht Absorber, bevorzugt zum Beschriften von Kunststofferzeugnissen. Der als Komponente G) einzusetzende Laserabsorber wird bevorzugt ausgewählt aus der Gruppe Antimontrioxid, Zinnoxid, Zinnorthophosphat, Bariumtitanat, Aluminiumoxid, Kupferhydroxyphosphat, Kupferorthophosphat, Kaliumkupferdiphosphat, Kupferhydroxid, Antimonzinnoxid, Bismuttrioxid und Antrachinon. Besonders bevorzugt sind Antimontrioxid und Antimonzinnoxid. Ganz besonders bevorzugt ist Antimontrioxid.

Der Laserabsorber, insbesondere das Antimontrioxid, kann direkt als Pulver oder in Form von Masterbatchen eingesetzt werden. Bevorzugte Masterbatche sind solche auf Basis Polyamid oder solche auf Basis Polybutylenterephthalat, Polyethylen, Polypropylen, Polyethylen-Polypropylen-Copolymer, Maleinsäureanhydrid-gepfropftem Polyethylen und/oder Maleinsäureanhydrid gepfropftem-Polypropylen, wobei die Polymere für den Antimontrioxid-Masterbatch einzeln oder im Gemisch eingesetzt werden können. Ganz besonders bevorzugt wird Antimontrioxid in Form eines Polyamid 6-basierten Masterbatches eingesetzt.

Der Laserabsorber kann einzeln oder als Gemisch mehrerer Laserabsorber eingesetzt werden.

Laserabsorber können Laserlicht einer bestimmten Wellenlänge absorbieren. In der Praxis liegt diese Wellenlänge zwischen 157 nm und 10,6 $\mu$m. Beispiele für Laser dieser Wellenlängen sind in WO2009/003976 A1 beschrieben. Bevorzugt werden Nd:YAG laser, mit denen Wellenlängen von 1064, 532, 355 und 266 nm realisiert werden können und $CO_2$-Laser eingesetzt.

**Komponente H)**

In einer Ausführungsform können die erfindungsgemäßen Zusammensetzungen als Komponente H) neben Melamincyanurat (Komponente D)) wenigstens ein von Komponente D) verschiedenes Flammschutzmittel enthalten, bevorzugt ein halogenfreies und/oder phosphorfreies Flammschutzmittel.

Bevorzugte halogenfreie und/oder phosphorfreie Flammschutzmittel sind stickstoffhaltige Flammschutzmittel, die einzeln oder im Gemisch eingesetzt werden.

Bevorzugte stickstoffhaltige Flammschutzmittel sind die Reaktionsprodukte aus Trichlortriazin, Piperazin und Morpholin gemäß CAS-No. 1078142-02-5, insbesondere MCA PPM Triazin HF der Fa. MCA Technologies GmbH, Biel-Benken, Schweiz, und Kondensationsprodukte des Melamins wie z.B. Melem, Melam, Melon bzw. höherkondensierte Verbindungen dieses Typs.

Bevorzugte anorganische stickstoffhaltige Verbindungen sind Ammoniumsalze.

Ferner können auch Salze aliphatischer und aromatischer Sulfonsäuren und mineralische Flammschutzadditive wie Aluminium- und/oder Magnesiumhydroxid, Ca-Mg-Carbonat-Hydrate (z.B. DE-A 4 236 122) eingesetzt werden.

In Frage kommen ferner Flammschutzmittelsynergisten aus der Gruppe der sauerstoffstickstoff- oder schwefelhaltigen Metallverbindungen, bevorzugt Zinkoxid, Zinkborat, Zinkstannat, Zinkhydroxystannat, Zinksulfid, Molybdänoxid, Magnesiumoxid, Magnesiumcarbonat, Calciumcarbonat, Calciumoxid, Titannitrid, Bornitrid, Magnesiumnitrid, Zinknitrid, Zinkphosphat, Calciumphosphat, Calciumborat, Magnesiumborat oder deren Mischungen.

In einer alternativen Ausführungsform können als Komponente H) aber auch - sofern der Bedarf es erfordert - halogenhaltige und/oder phosphorhaltige Flammschutzmittel eingesetzt werden.

Bevorzugte halogenhaltige Flammschutzmittel sind handelsübliche organische Halogenverbindungen, besonders bevorzugt Ethylen-1,2-bistetrabromphthalimid, Decabromdiphenylethan, Tetrabrombisphenol-A-epoxyoligomer, Tetrabrombisphenol-A-oligocarbonat, Tetrachlorbisphenol-A-oligocarbonat, Polypentabrombenzylacrylat, bromiertes Polystyrol oder bromierte Polyphenylenether, die alleine oder in Kombination mit Synergisten, insbesondere Antimontrioxid oder Antimontpentoxid, eingesetzt werden können.

Bevorzugte phosphorhaltige Flammschutzmittel sind roter Phosphor, Metallphosphinate, insbesondere Aluminiumphosphinat oder Zinkphosphinat, Metallphosphonate, insbesondere Aluminiumphosphonat, Calciumphosphonat oder Zinkphosphonat, Derivate der 9,10-Dihydro-9-oxa-10-phosphaphenanthren-10-oxide (DOPO-Derivate), Resorcinol-bis-(diphenylphosphat) (RDP), einschließlich Oligomere sowie Bisphenol-A-bis-diphenylphosphat (BDP) einschließlich Oligomere, ferner Zink-bis(diethylphosphinat), Aluminium-tris(diethylphosphinat), Melaminphosphat, Melaminpyrophosphat, Melaminpolyphosphat, Melamin-poly(aluminiumphosphat), Melamin-poly(zinkphosphat) oder Phenoxyphosphatenoligomere und deren Mischungen.

Weitere als Komponente H) einzusetzende Flammschutzmittel sind Kohlebildner, besonders bevorzugt Phenol-Formaldehydharze, Polycarbonate, Polyimide, Polysulfone, Polyethersulfone oder Polyetherketone sowie Antitropfmittel, insbesondere Tetrafluorethylenpolymerisate.

Die Flammschutzmittel können in Reinform, sowie über Masterbatche oder Kompaktate zugesetzt werden.

**Komponente K)**

Als Komponente K) enthalten die Zusammensetzungen wenigstens einen, von den Komponenten B) und C) verschiedenen, weiteren Füllstoff oder Verstärkungsstoff.

Dabei können auch Mischungen aus zwei oder mehreren unterschiedlichen Füllstoffen und/oder Verstärkungsstoffen, bevorzugt auf Basis von Talk, Glimmer, Silikat, Quarz, Wollastonit, Kaolin, amorphe Kieselsäuren, nanoskalige Mineralien, besonders bevorzugt Montmorillonite oder Nano-Böhmit, Magnesiumcarbonat, Kreide, Feldspat, Bariumsulfat und/oder faserförmige Füllstoffe und/oder Verstärkungsstoffe auf der Basis von Kohlenstofffasern eingesetzt werden. Bevorzugt werden mineralische teilchenförmige Füllstoffe auf der Basis von Talk, Glimmer, Silikat, Quarz, Wollastonit, Kaolin, amorphe Kieselsäuren, Magnesiumcarbonat, Kreide, Feldspat und/oder Bariumsulfat eingesetzt. Besonders bevorzugt werden mineralische teilchenförmige Füllstoffe auf der Basis von Talk, Wollastonit und/oder Kaolin eingesetzt.

Besonders bevorzugt werden ferner auch nadelförmige mineralische Füllstoffe eingesetzt. Unter nadelförmigen, mineralischen Füllstoffen wird erfindungsgemäß ein mineralischer Füllstoff mit stark ausgeprägtem nadelförmigen Charakter verstanden. Bevorzugt seien nadelförmige Wollastonite genannt. Bevorzugt weist der nadelförmige, mineralische Füllstoff ein Länge : Durchmesser - Verhältnis im Bereich von 2:1 bis 35:1, besonders bevorzugt im Bereich von 3:1 bis 19:1, insbesondere bevorzugt im Bereich von 4:1 bis 12:1 auf. Die mittlere Teilchengröße der nadelförmigen, mineralischen Füllstoffe liegt bevorzugt bei kleiner 20 $\mu$m, besonders bevorzugt bei kleiner 15 $\mu$m, insbesondere bevorzugt bei kleiner 10 $\mu$m, bestimmt mit einem CILAS GRANULOMETER.

Die als Komponente K) einzusetzenden Füllstoffe und/oder Verstärkungsstoffe sind in einer bevorzugten Ausführungsform Oberflächen modifiziert, vorzugsweise mit einem Haftvermittler bzw. Haftvermittlersystem, besonders bevorzugt auf Silanbasis. Die Vorbehandlung ist jedoch nicht unbedingt erforderlich. Als Haftvermittler kommen ebenfalls die bereits oben beschriebenen Silanverbindungen der allgemeinen Formel (I) infrage.

Für die Ausrüstung der Komponente K) werden die Silanverbindungen im Allgemeinen in Mengen von 0,05 bis 2 Gew.-%, vorzugsweise 0,25 bis 1,5 Gew.-% und insbesondere 0,5 bis 1 Gew.-% bezogen auf den mineralischen Füllstoff zur Oberflächenbeschichtung eingesetzt.

Auch die Füllstoffe der Komponente K) können bedingt durch die Verarbeitung zur Zusammensetzung bzw. zum Erzeugnis aus der Zusammensetzung bzw. im Erzeugnis einen kleineren d97- bzw. d50-Wert aufweisen, als die ursprünglich eingesetzten Füllstoffe aufweisen.

**Komponente L)**

Bevorzugte als Komponente L) einzusetzende Additive sind Antioxidantien, UV-Stabilisatoren, Gammastrahlenstabilisatoren, Hydrolysestabilisatoren, Thermostabilisatoren, Antistatika, Emulgatoren, Nukleierungsmittel, Weichmacher, Verarbeitungshilfsmittel, Schlagzähmodifikatoren Farbstoffe, Pigmente und Elastomermodifikatoren. Die Additive können alleine oder in Mischung bzw. in Form von Masterbatchen eingesetzt werden.

Bevorzugt wird als Antioxidans Lowinox® HD 98, 3,3'-Bis(3,5-di-tert-butyl-4-hydroxyphenyl)-N,N'-hexamethylendipropionamid [CAS No. 23128-74-7] eingesetzt.

Als UV-Stabilisatoren werden bevorzugt substituierte Resorcine, Salicylate, Benzotriazole und Benzophenone eingesetzt.

Als Farbmittel werden bevorzugt anorganische Pigmente, insbesondere Ultramarinblau, Eisenoxid, Zinksulfid oder Ruß, weiterhin organische Pigmente, bevorzugt Phthalocyanine, Chinacridone, Perylene sowie Farbstoffe, bevorzugt Nigrosin und Anthrachinone eingesetzt werden.

Als Thermostabilisator werden bevorzugt sterisch gehinderte Phenole und/oder Phosphite, Hydrochinone, aromatische sekundäre Amine wie Diphenylamine, substituierte Resorcine, Salicylate, Benzotriazole und Benzophenone, sowie verschieden substituierte Vertreter dieser Gruppen oder deren Mischungen eingesetzt. Besonders bevorzugt werden sterisch gehinderte Phenole alleine oder in Kombination mit Phosphiten eingesetzt, wobei die Verwendung von N,N'Bis[3-(3',5'-di-tert-butyl-4'-hydroxyphenyl)propionyl]hexamethylenediamine (z.B. Irganox® 1098 der Fa. BASF SE, Ludwigshafen. Deutschland) ganz besonders bevorzugt ist.

Als Nukleierungsmittel werden bevorzugt Natrium- oder Calciumphenylphosphinat, Aluminiumoxid oder Siliziumdioxid sowie ganz besonders bevorzugt Talkum eingesetzt, wobei diese Aufzählung nicht abschließend ist.

Als Fließhilfsmittel werden bevorzugt Copolymerisate aus mindestens einem $\alpha$-Olefin mit mindestens einem Methacrylsäurester oder Acrylsäureester eines aliphatischen Alkohols eingesetzt. Besonders bevorzugt sind dabei Copolymerisate, bei denen das $\alpha$-Olefin aus Ethen und/oder Propen aufgebaut ist und der Methacrylsäurester oder Acrylsäureester als Alkoholkomponente lineare oder verzweigte Alkylgruppen mit 6 bis 20C-Atomen enthält. Ganz besonders bevorzugt ist Acrylsäure-(2-ethyl)-hexylester. Als Fließhilfsmittel erfindungsgemäß geeignete Copolymerisate zeichnen sich neben der Zusammensetzung auch durch das niedrige Molekulargewicht aus. Dementsprechend sind für die erfindungsgemäß vor thermischem Abbau zu bewahrenden Zusammensetzungen vor allem Copolymerisate geeignet, die einen MFI-Wert gemessen bei 190°C und einer Belastung von 2,16 kg von mindestens 100 g / 10 min, bevorzugt von mindestens 150 g / 10 min, besonders bevorzugt von mindestens 300 g / 10 min aufweisen. Der MFI, Melt-Flow-Index, dient zur Charakterisierung des Flusses einer Schmelze eines Thermoplasten und unterliegt den Normen ISO 1133 oder ASTM D 1238. Der MFI bzw. alle Angaben zum MFI im Rahmen der vorliegenden Erfindung beziehen sich bzw. wurden einheitlich nach ISO 1133 bei 190°C und einem Prüfgewicht von 2,16 kg gemessen bzw. bestimmt.

Bevorzugt als Komponente L) einzusetzende Weichmacher sind Phthalsäuredioctylester, Phthalsäuredibenzylester, Phthalsäurebutylbenzylester, Kohlenwasserstofföle oder N-(n-Butyl)benzolsulfonamid.

Die als Komponente L) einzusetzenden Elastomermodifikatoren umfassen bevorzugt u.a. ein oder mehrere Pfropfpolymerisate von

L.1 5 bis 95 Gew.-%, vorzugsweise 30 bis 90 Gew.-%, wenigstens eines Vinylmonomeren und

L.2 95 bis 5 Gew.-%, vorzugsweise 70 bis 10 Gew.-% einer oder mehrerer Pfropfgrundlagen mit Glasübergangstemperaturen < 10°C, vorzugsweise < 0°C, besonders bevorzugt < -20°C.

Die Pfropfgrundlage L.2 hat im allgemeinen eine mittlere Teilchengröße (d50-Wert) von 0,05 bis 10 $\mu$m, vorzugsweise 0,1 bis 5 $\mu$m, besonders bevorzugt 0,2 bis 1 $\mu$m.

Monomere zu L.1 sind vorzugsweise Gemische aus

L.1.1 50 bis 99 Gew.-% Vinylaromaten und/oder kernsubstituierten Vinylaromaten, insbesondere Styrol, $\alpha$-Methylstyrol, p-Methylstyrol, p-Chlorstyrol, und/oder Methacrylsäure-($C_1$-$C_8$)-Alkylester, insbesondere. Methylmethacrylat, Ethylmethacrylat) und

L.1.2 1 bis 50 Gew.-% Vinylcyanide, insbesondere ungesättigte Nitrile wie Acrylnitril und Methacrylnitril, und/oder (Meth)Acrylsäure-($C_1$-$C_8$)-alkylester, insbesondere Methylmethacrylat, Glycidylmethacrylat, n-Butylacrylat, t-Butylacrylat, und/oder Derivate ,insbesondere Anhydride und Imide ungesättigter Carbonsäuren, insbesondere Maleinsäureanhydrid oder N-Phenyl-Maleinimid).

Bevorzugte Monomere L.1.1 sind ausgewählt aus mindestens einem der Monomere Styrol, $\alpha$-Methylstyrol und Methylmethacrylat, bevorzugte Monomere L.1.2 sind ausgewählt aus mindestens einem der Monomere Acrylnitril, Maleinsäureanhydrid, Glycidylmethacrylat und Methylmethacrylat.

Besonders bevorzugte Monomere sind L.1.1 Styrol und L.1.2 Acrylnitril.

Für die in den Elastomermodifikatoren einzusetzenden Pfropfpolymerisate geeignete Pfropfgrundlagen L.2 sind beispielsweise Dienkautschuke, EPDM-Kautschuke, also solche auf Basis Ethylen/Propylen und gegebenenfalls Dien, ferner Acrylat-, Polyurethan-, Silikon-, Chloropren und Ethylen/Vinylacetat-Kautschuke. EPDM steht für Ethylen-Propylen-Dien-Kautschuk.

Bevorzugte Pfropfgrundlagen L.2 sind Dienkautschuke, insbesondere auf Basis Butadien, Isopren etc oder Gemische von Dienkautschuken oder Copolymerisate von Dienkautschuken oder deren Gemischen mit weiteren copolymerisierbaren Monomeren, insbesondere gemäß L.1.1 und L.1.2, mit der Maßgabe, dass die Glasübergangstemperatur der Komponente L.2 bei <10°C, vorzugsweise bei <0°C, besonders bevorzugt bei <-10°C liegt.

Besonders bevorzugte Propfgrundlagen L.2 sind ABS-Polymerisate (Emulsions-, Masse- und Suspensions-ABS) wobei ABS für Acrylnitril-Butadien-Styrol steht, wie sie z. B. in der DE-A 2 035 390 (=US-A 3 644 574) oder in der DE-A 2 248 242 (=GB-A 1 409 275) bzw. in Ullmann, Enzyklopädie der Technischen Chemie, Bd. 19 (1980), S. 280 ff. beschrieben sind. Der Gelanteil der Pfropfgrundlage L.2 beträgt bevorzugt mindestens 30 Gew.-%, besonders bevorzugt mindestens 40 Gew.-% (in Toluol gemessen).

Die Elastomermodifikatoren bzw. Pfropfpolymerisate werden durch radikalische Polymerisation, bevorzugt durch Emulsions-, Suspensions-, Lösungs- oder Massepolymerisation, insbesondere durch Emulsions- oder Massepolymerisation hergestellt. Besonders geeignete Pfropfkautschuke sind auch ABS-Polymerisate, die durch Redox-Initiierung mit einem Initiatorsystem aus organischem Hydroperoxid und Ascorbinsäure gemäß US-A 4 937 285 hergestellt werden.

Da bei der Pfropfreaktion die Pfropfmonomeren bekanntlich nicht unbedingt vollständig auf die Pfropfgrundlage aufgepfropft werden, werden erfindungsgemäß unter Pfropfpolymerisaten auch solche Produkte verstanden, die durch (Co)Polymerisation der Pfropfmonomere in Gegenwart der Pfropfgrundlage gewonnen werden und bei der Aufarbeitung mit anfallen.

Ebenfalls geeignete Acrylatkautschuke basieren auf Pfropfgrundlagen L.2 die vorzugsweise Polymerisate aus Acrylsäurealkylestern, gegebenenfalls mit bis zu 40 Gew.-%, bezogen auf L.2 anderen polymerisierbaren, ethylenisch ungesättigten Monomeren. Zu den bevorzugten polymerisierbaren Acrylsäureestern gehören $C_1$-$C_8$-Alkylester, vorzugsweise Methyl-, Ethyl-, Butyl-, n-Octyl- und 2-Ethylhexylester; Halogenalkylester, vorzugsweise Halogen-$C_1$-$C_8$-alkylester, wie Chlorethylacrylat, Glycidylester sowie Mischungen dieser Monomeren. Dabei sind Propfpolymerisate mit Butylacrylat als Kern und Methylmethacrylaten als Schale, insbesondere. Paraloid® EXL2300, Fa. Dow Corning Corporation, Midland Michigan, USA, besonders bevorzugt.

Zur Vernetzung können Monomere mit mehr als einer polymerisierbaren Doppelbindung copolymerisiert werden. Bevorzugte Beispiele für vernetzende Monomere sind Ester ungesättigter Monocarbonsäuren mit 3 bis 8 C-Atomen und ungesättigter einwertiger Alkohole mit 3 bis 12 C-Atomen, oder gesättigter Polyole mit 2 bis 4 OH-Gruppen und 2 bis 20 C-Atomen, bevorzugt Ethylenglykoldimethacrylat, Allylmethacrylat; mehrfach ungesättigte heterocyclische Verbindungen, bevorzugt Trivinyl- und Triallylcyanurat; polyfunktionelle Vinylverbindungen, bevorzugt Di- und Trivinylbenzole; aber auch Triallylphosphat und Diallylphthalat.

Bevorzugte vernetzende Monomere sind Allylmethacrylat, Ethylenglykoldimethacrylat, Diallylphthalat und heterocyclische Verbindungen, die mindestens 3 ethylenisch ungesättigte Gruppen aufweisen.

Besonders bevorzugte vernetzende Monomere sind die cyclischen Monomere Triallylcyanurat, Triallylisocyanurat, Triacryloylhexahydro-s-triazin, Triallylbenzole. Die Menge der vernetzten Monomere beträgt vorzugsweise 0,02 bis 5 Gew.-%, insbesondere 0,05 bis 2 Gew.-%, bezogen auf die Pfropfgrundlage L.2.

Bei cyclischen vernetzenden Monomeren mit mindestens 3 ethylenisch ungesättigten Gruppen ist es vorteilhaft, die Menge auf unter 1 Gew.-% der Pfropfgrundlage L.2 zu beschränken.

Bevorzugte "andere" polymerisierbare, ethylenisch ungesättigte Monomere, die neben den Acrylsäureestern gegebenenfalls zur Herstellung der Pfropfgrundlage L.2 dienen können, sind Acrylnitril, Styrol, $\alpha$-Methylstyrol, Acrylamide, Vinyl-$C_1$-$C_6$-alkylether, Methylmethacrylat, Glycidylmethacrylat, Butadien. Bevorzugte Acrylatkautschuke als Pfropfgrundlage L.2 sind Emulsionspolymerisate, die einen Gelgehalt von mindestens 60 Gew.-% aufweisen.

Weitere bevorzugt geeignete Pfropfgrundlagen gemäß L.2 sind Silikonkautschuke mit pfropfaktiven Stellen, wie sie in den DE-A 3 704 657 (= US 4 859 740), DE-A 3 704 655 (= US 4 861 831), DE-A 3 631 540 (= US 4 806 593) und DE-A 3 631 539 (= US 4 812 515) beschrieben werden.

Neben Elastomermodifikatoren, die auf Propfpolymeren beruhen, können ebenfalls nicht auf Propfpolymeren basierende Elastomermodifikatoren eingesetzt werden, die Glasübergangstemperaturen < 10°C, vorzugsweise < 0°C, besonders bevorzugt < -20°C aufweisen. Bevorzugt gehören hierzu Elastomere mit einer Blockcopolymerstruktur sowie weiterhin thermoplastisch aufschmelzbare Elastomere, insbesondere EPM-, EPDM- und/oder SEBS-Kautschuke (EPM = Ethylen-Propylen-Copolymer, EPDM = Ethylen-Propylen-Dien-Kautschuk und SEBS = Styrol-Ethen-Buten-Styrol Copolymer).

## Verfahren

Die vorliegende Erfindung betrifft zudem ein Verfahren zur Herstellung von Erzeugnissen, bevorzugt von Elektrobauteilen, besonders bevorzugt von FI-Schaltern und Leitungsschutzschaltern, ganz besonders bevorzugt von Leitungsschutzschaltern mit Bemessungsströmen >16 A, insbesondere bevorzugt von Leitungsschutzschaltern mit Bemessungsströmen >32 A, insbesondere ganz besonders bevorzugt von Leitungsschutzschaltern mit Bemessungsströmen >64 A durch Einsatz der erfindungsgemäßen Zusammensetzungen im Spritzguss einschließlich der Sonderverfahren GIT (Gasinjektionstechnik), WIT (Wasserinjektionstechnik) und PIT (Projektilinjektionstechnik), in Extrusionsverfahren, einschließlich in der Profil-Extrusion, oder beim Blasformen.

Zur Herstellung dieser Erzeugnisse werden die einzelnen Komponenten der erfindungsgemäßen Zusammensetzung zunächst in wenigstens einem Mischwerkzeug gemischt und diese dann als Formmasse vorliegende Mischung durch wenigstens einen Mischwerkzeugauslass entweder der direkten Weiterverarbeitung zugeführt, oder als Strang ausgetragen und mittels eines Granulators, bevorzugt einer rotierenden Messerwalze, in Granulate gewünschter Länge geschnitten, um für eine spätere Verarbeitung zur Verfügung zu stehen.

Da die meisten Verarbeiter Kunststoff in Form von Granulat benötigen, spielt das Granulieren eine immer wichtigere Rolle. Man unterscheidet grundsätzlich zwischen Heiß- und Kaltabschlag. Je nach Verarbeitung resultieren daraus verschiedene Kornformen. Im Falle der Heißabschlags erhält man das Granulat in Perlen oder Linsenkornform, im Falle des Kaltabschlags erhält man das Granulat in Zylinderformen oder Würfelformen. Erfindungsgemäße Zusammensetzungen in Granulatform werden bevorzugt durch Kaltabschlag erhalten.

Dem Fachmann steht es frei, verschiedene Mischwerkzeuge einzusetzen, die geeignet sind, ein optimales Mischergebnis hinsichtlich einer Mischung der Komponenten in den erfindungsgemäß zu verwendenden Zusammensetzungen zu erzielen. Ein Extruder ist ein bevorzugtes Mischwerkzeug im Sinne der vorliegenden Erfindung. Bevorzugte Extruder sind Einschneckenextruder oder Doppelschneckenextruder sowie die jeweiligen Untergruppen, ganz besonders bevorzugt konventionelle Einschneckenextruder, förderwirksame Einschneckenextruder, gegenläufige Doppelschneckenextruder oder gleichläufige Doppelschneckenextruder. Diese sind dem Fachmann aus Technische Thermoplaste 4. Polyamide, Hrsg.: G. W. Becker und D. Braun, Carl Hanser Verlag, 1998, S. 311-314 sowie K. Brast, Dissertation "Verarbeitung von Langfaser-verstärkten Thermoplasten im direkten Plastifizier-/Pressverfahren", Rheinisch-Westfälische Technische Hochschule Aachen, 2001, S. 30 - 33 bekannt.

Aus den erfindungsgemäß als Formmasse bzw. Granulat vorliegenden Zusammensetzungen werden durch formgebende Verfahren schließlich die erfindungsgemäßen Erzeugnisse, bevorzugt Elektro- bzw. Elektronikerzeugnisse, hergestellt. Bevorzugte formgebende Verfahren sind der Spritzguss oder die Extrusion.

Erfindungsgemäße Verfahren zur Herstellung von Erzeugnissen durch Extrusion oder Spritzguß arbeiten bevorzugt bei Schmelzetemperaturen im Bereich von 230 bis 330°C, besonders bevorzugt bei Schmelzetemperaturen im Bereich von 250 bis 300°C sowie bevorzugt zusätzlich bei Drücken von maximal 2500 bar, besonders bevorzugt bei Drücken von maximal 2000 bar, ganz besonders bevorzugt bei Drücken von maximal 1500 bar und insbesondere bevorzugt bei Drücken von maximal 750 bar.

Das Verfahren des Spritzgusses zeichnet sich dadurch aus, dass die erfindungsgemäß einzusetzende Zusammensetzung, bevorzugt in Granulatform, in einem beheizten zylindrischen Hohlraum aufgeschmolzen (plastifiziert) und als Spritzmasse unter Druck in einen temperierten Hohlraum gespritzt wird. Nach dem Abkühlen (Erstarren) der Masse wird das Spritzgussteil entformt. Man unterscheidet dabei die Arbeitsschritte

1. Plastifizieren / Aufschmelzen

2. Einspritzphase (Füllvorgang)

3. Nachdruckphase (wegen thermischer Kontraktion bei der Kristallisation)

4. Entformen.

Eine Spritzgießmaschine besteht aus einer Schließeinheit, der Spritzeinheit, dem Antrieb und der Steuerung. Zur Schließeinheit gehören feste und bewegliche Aufspannplatten für das Werkzeug, eine Stirnplatte sowie Säulen und Antrieb der beweglichen Werkzeugaufspannplatte (Kniehebelgelenk oder hydraulische Schließeinheit).

Eine Spritzeinheit umfasst den elektrisch beheizbaren Zylinder, den Antrieb der Schnecke (Motor, Getriebe) und die Hydraulik zum Verschieben der Schnecke und Spritzeinheit. Die Aufgabe der Spritzeinheit besteht darin, die erfindungsgemäß einzusetzende Zusammensetzung, insbesondere in Form von Granulat, aufzuschmelzen, zu dosieren, einzuspritzen und nachzudrücken (wegen Kontraktion). Das Problem des Rückflusses der Schmelze innerhalb der Schnecke (Leckströmung) wird durch Rückstromsperren gelöst.

Im Spritzgießwerkzeug wird dann die einströmende Schmelze gelöst, gekühlt und somit das zu fertigende Bauteil gefertigt. Notwendig dazu sind immer zwei Werkzeughälften. Beim Spritzguss unterscheidet man folgende Funktionskomplexe:

- Angusssystem
- Formbildende Einsätze
- Entlüftung

- Maschinen- und Kraftaufnahme
- Entformungssystem und Bewegungsübertragung
- Temperierung

Die Spritzguss-Sonderverfahren GIT (Gasinjektionstechnik), WIT (Wasserinjektionstechnik) und Projektilinjektionstechnik (PIT) sind spezialisierte Spritzgussverfahren zur Herstellung hohler Werkstücke. Ein Unterschied zum Standard-Spritzguss besteht in einem speziellen Arbeitsschritt gegen Ende der Werkzeugfüllphase bzw. nach einer definierten Teilfüllung der Gussform. Im verfahrensspezifischen Arbeitsschritt wird ein Prozessmedium über einen so genannten Injektor in die schmelzeflüssige Seele des Vorspritzlings zur Hohlraumbildung injiziert. Dabei handelt es sich um Gas - in der Regel Stickstoff - im Fall der GIT und Wasser im Fall der WIT. Im Falle der PIT wird ein Projektil in die schmelzeflüssige Seele eingeschossen und auf diesem Weg ein Hohlraum ausgebildet.

Im Gegensatz zum Spritzguss wird bei der Extrusion ein endlos geformter Kunststoffstrang, enthaltend die erfindungsgemäße Zusammensetzung, in einem Extruder eingesetzt, wobei der Extruder eine Maschine zur Herstellung thermoplastischer Formstücke ist. Man unterscheidet

- Einschneckenextruder und Doppelschneckenextruder sowie die jeweiligen Untergruppen,
- konventionelle Einschneckenextruder, förderwirksame Einschneckenextruder,
- gegenläufige Doppelschneckenextruder und gleichläufige Doppelschneckenextruder.

Profile im Sinne der vorliegenden Erfindung sind (Bau-)Teile, die über ihre gesamte Länge einen identischen Querschnitt aufweisen. Sie können im Profil-Extrusionsverfahren hergestellt werden. Die grundsätzlichen Verfahrensschritte des Profil-Extrusionsverfahrens sind:

1. Plastifizieren und Bereitstellen der thermoplastischen Schmelze in einem Extruder,
2. Extrusion des thermoplastischen Schmelzestrangs durch eine Kalibrierhülse, die den Querschnitt des zu extrudierenden Profils aufweist,
3. Abkühlung des extrudierten Profils in einem Kalibriertisch,
4. Weitertransport des Profils mit einem Abzug hinter dem Kalibriertisch,
5. Ablängen des zuvor endlosen Profils in einer Schneideanlage,
6. Sammeln der abgelängten Profile an einem Sammeltisch.

Eine Beschreibung der Profilextrusion von Polyamid 6 und Polyamid 66 erfolgt in Kunststoff-Handbuch 3/4, Polyamide, Carl Hanser Verlag, München 1998, Seite 374-384. Blasformverfahren im Sinne der vorliegenden Erfindung sind bevorzugt Standard-Extrusionsblasformen, 3D-Extrusionsblasformen, Saugblasformverfahren und die sequentielle Coextrusion.

Die grundsätzlichen Verfahrensschritte des Standard-Extrusionsblasformens sind gemäß (Thielen, Hartwig, Gust, "Blasformen von Kunststoffhohlkörpern", Carl Hanser Verlag, München 2006, Seiten 15 bis 17):

1. Plastifizieren und Bereitstellen der thermoplastischen Schmelze in einem Extruder,
2. Umlenken der Schmelze in eine senkrechte Fließbewegung nach unten und das Ausformen eines schlauchförmigen Schmelze-"Vorformlings",
3. Umschließen des frei hängenden Vorformlings durch eine in der Regel aus zwei Halbschalen bestehende Form, dem Blasformwerkzeug,
4. Einschieben eines Blasdorns oder einer (ggf. mehrerer) Blasnadel(n),
5. Aufblasen des plastischen Vorformlings gegen die gekühlte Wand des Blasformwerkzeugs, wo der Kunststoff

abkühlt, erhärtet und die endgültige Form des Formteils annimmt,

6. Öffnen der Form und Entformen des blasgeformten Teils,

7. Entfernen der abgequetschten "Butzen"-Abfälle" an beiden Enden des Blasformteils.

Weitere Schritte der Nachbearbeitung können folgen.

Mittels Standard-Extrusionsblasformen lassen sich auch Erzeugnisse mit komplexer Geometrie und mehrachsigen Krümmungen herstellen. Allerdings werden dann Erzeugnisse erhalten, die einen großen Anteil von überschüssigem, abgequetschtem Material enthalten und in großen Bereichen eine Schweißnaht aufweisen.

Beim 3D-Extrusionsblasformen, auch als 3D-Blasformen bezeichnet, wird daher zur Vermeidung von Schweißnähten und zur Reduktion des Materialeinsatzes ein in seinem Durchmesser auf den Artikelquerschnitt angepasster Vorformling mit speziellen Vorrichtungen deformiert und manipuliert und dann direkt in die Blasformkavität eingebracht. Die verbleibende Quetschkante wird somit auf ein Minimum an den Artikelenden reduziert (Thielen, Hartwig, Gust, "Blasformen von Kunststoffhohlkörpern", Carl Hanser Verlag, München 2006, Seite 117-122).

Beim Saugblasformverfahren, auch als Saugblasen bezeichnet, wird der Vorformling direkt aus der Düse des Schlauchkopfes in die geschlossene Blasform gefördert und über einen Luftstrom durch die Blasform hindurch "gesaugt". Nach Austritt des unteren Endes des Vorformlings aus der Blasform wird dieser durch Schließelemente oben und unten abgequetscht, und der Aufblas- und Kühlvorgang schließen sich an (Thielen, Hartwig, Gust, "Blasformen von Kunststoffhohlkörpern", Carl Hanser Verlag, München 2006, Seite 123).

**Verwendung**

Gegenstand der vorliegenden Anmeldung ist auch die Verwendung der erfindungsgemäßen Zusammensetzungen als Formmassen im Spritzguss, einschließlich der Sonderverfahren GIT (Gasinjektionstechnik), WIT (Wasserinjektionstechnik) und PIT (Projektilinjektionstechnik), in Extrusionsverfahren bevorzugt in der Profil-Extrusion, im Blasformen, besonders bevorzugt Standard-Extrusionsblasformen, 3D-Extrusionsblasformverfahren oder Saugblasformverfahren um daraus erfindungsgemäße Erzeugnisse herzustellen.

Die vorliegende Erfindung betrifft aber auch die Verwendung der erfindungsgemäßen Zusammensetzungen zur Herstellung von Erzeugnissen, bevorzugt von Elektrobauteilen, besonders bevorzugt von FI-Schaltern und Leitungsschutzschaltern, ganz besonders bevorzugt von Leitungsschutzschaltern mit Bemessungsströmen >16 A, insbesondere bevorzugt von Leitungsschutzschaltern mit Bemessungsströmen >32 A, insbesondere ganz besonders bevorzugt von Leitungsschutzschaltern mit Bemessungsströmen >64 A.

**<u>Beispiele</u>**

Zum Nachweis der erfindungsgemäß beschriebenen Verbesserungen der Eigenschaften wurden zunächst durch Compoundierung entsprechende Kunststoff-Zusammensetzungen angefertigt. Die einzelnen Komponenten gemäß Tabelle 2 wurden hierzu in einem Zweiwellenextruder (ZSK 25 Compounder der Fa. Coperion Werner & Pfleiderer (Stuttgart, Deutschland)) bei Temperaturen zwischen 240 und 280°C gemischt, als Strang ausgetragen, bis zur Granulierfähigkeit abgekühlt und granuliert. Nach dem Trocknen (in der Regel zwei Tage bei 70°C im Vakuumtrockenschrank) erfolgte die Verarbeitung des Granulats bei Temperaturen im Bereich von 240 bis 280°C zu Normprüfkörpern für die jeweiligen Prüfungen.

Die Glühdrahtbeständigkeit wurde anhand der Glühdrahtprüfung GWFI (Glow-Wire Flammability-Index) nach IEC 60695-2-12 an Rundplatten mit einem Durchmesser von 80 mm und einer Dicke von 0,75 mm bestimmt.

Die Charpy-Schlagzähigkeit wurde nach ISO 179-1eU an spritzfrischen Probekörpern der Abmessung 80 mm • 10 mm • 4mm bestimmt.

Zugfestigkeit, Reißdehnung und Zugmodul wurden nach ISO 527-1/-2 an Schulterstäben Typ1A (Abmessung 170 mm • 10mm • 4mm) bestimmt.

Die Wärmeformbeständigkeit wurde nach ISO 75-1,-2 mit einer aufgebrachten Biegespannung von 1,8MPa (HDT-A) an Prüfkörpern der Abmessung 80 mm • 10mm •4mm bestimmt.

Die Bestimmung der Verarbeitungsschwindung, jeweils parallel und senkrecht zur Spritzrichtung, wurde nach ISO 294-4 an Probekörpern der Abmessung 60 mm • 60mm •2mm bei einer Massetemperatur von 260°C und einer Werkzeugtemperatur von 80°C bei 600bar Nachdruck bestimmt.

Als Maß für die Isotropie wurde anschließend der Verzug als Quotient aus Verarbeitungsschwindung parallel zur Spritzrichtung und Verarbeitungsschwindung senkrecht zur Spritzrichtung berechnet. Für die so berechnete Isotropie kann man ab Werten oberhalb von 0,8 von verzugsarmen Materialien sprechen.

So weist z.B. ein handelsübliches Polyamid 6 mit 30 Gew.-% Glasfasern eine Verarbeitungsschwindung von

0,3%/0,7% [parallel/senkrecht] aus, was dann nach o.g. Formel zu einem Wert für Isotropie von nur 0,4 führt und damit einen starken Verzug bedeutet.

Die Partikelgrößenbestimmung der gemahlenen Glaspartikel (Komponente B)) erfolgte mit einem laseroptischen Verfahren ("Eye Tech") der Fa. Ankersmid Ltd, Oosterhout, Niederlande in einer Zelle des Typs "ACM-104 Liquid Flow (4x4mm)". Die Messzeit betrug etwa 900sec. Die Auswertung bezieht sich auf die Oberfläche der Glaspartikel.

In den Versuchen wurden verwendet:

| | |
|---|---|
| Komponente A): Köln, | Polyamid 6 (Durethan® B26, Fa. Lanxess Deutschland GmbH, Deutschland) |
| Komponente A'): | Polyamid 66 (Zytel® 101NC010 (Fa. Dupont, Wilmington, USA)) |
| Komponente B): | MF7900 der Firma Lanxess Deutschland GmbH, Köln, Deutschland. [Ein nicht-faserförmiges und nicht-geschäumtes gemahlenes Glas auf Basis E-Glas enthaltend ca. 0,1 Gew.-% Triethoxy(3-aminopropyl)silan-Schlichte B') mit einem d90 von 54 µm, einem d50 von 14 µm, einem d10 von 2,4 µm und einer mittleren Teilchengröße von 21 µm, jeweils bezogen auf die Teilchenoberfläche]. |
| Komponente C): | Schnittglasfaser CS 7997 der Firma Lanxess Deutschland GmbH, Köln, Deutschland [mittlerer Faserdurchmesser 10 µm, mittlere Faserlänge 4,5 mm, E-Glas] |
| Komponente D): | Melamincyanurat, [CAS No. 37640-57-6] (Melapur® MC25, der Fa. BASF, Ludwigshafen, Deutschland) |
| Komponente E): | Titandioxid [CAS No. 13463-67-7] (Kronos 2230, der Fa. Kronos, Dallas, USA) |
| Komponente H): | Ethylen-bis-stearylamid [CAS No. 110-30-5] als Loxiol® EBS von Emery Oleochemicals |
| Komponente L): | Lowinox® HD 98 - 50 D - TDS, 3,3'-Bis(3,5-di-tert-butyl-4-hydroxyphenyl)-N,N'-hexamethylendipropionamid [CAS No. 23128-74-7] |

__Tabelle 2__

| Komponenten | | 1 | 2 | 3 | 4 | 5 |
|---|---|---|---|---|---|---|
| A | [%] | 74,6 | 69,6 | 69,1 | - | - |
| A' | | - | - | - | 63,6 | 66,1 |
| B | [%] | 16 | 21 | 19 | 21 | 21 |
| C | [%] | 3 | 3 | 5 | 4 | 4 |
| D | [%] | 4 | 4 | 4,5 | 9 | 6,5 |
| E | [%] | 2 | 2 | 2 | 2 | 2 |
| H | [%] | 0,2 | 0,2 | 0,2 | 0,2 | 0,2 |
| L | [%] | 0,2 | 0,2 | 0,2 | 0,2 | 0,2 |
| GWFI (0,75mm) | [°C] | 960 | 960 | 960 | 960 | 960 |
| HDT A | [°C] | 134 | 140 | 163 | 142 | 143 |
| CHARPY | [kJ/m$^2$ ] | 28 | 31 | 26 | 37 | 33 |
| Verarbeitungsschwindung (parallel) | [%] | 0,76 | 0,66 | 0,64 | 0,96 | 1,21 |
| Verarbeitungsschwindung (senkrecht) | [%] | 0,75 | 0,70 | 0,77 | 1,04 | 1,2 |
| Isotropie [parallel/ senkrecht] | | 1,01 | 0,94 | 0,83 | 0,92 | 1,01 |
| Zugfestigkeit | [MPa] | 72 | 70 | 85 | 76 | 78 |
| Reißdehnung | [%] | 3,1 | 2,9 | 3 | 2,6 | 2,9 |
| Zug-modul | [MPa] | 417 9 | 451 4 | 5322 | 525 7 | 5182 |

Angaben der Komponenten in Gew.-% bezogen auf die Gesamtformmasse

Die Beispiele in Tabelle 2 zeigen, dass die erfindungsgemäßen Beispiele 1 bis 5 sowohl für PA 6 als auch für PA 66 in der Glühdrahtprüfung auch bei Probekörpern von nur 0,75 mm Dicke die maximale Temperatur von 960°C erreichen, dabei mit einer Isotropie oberhalb von 0,8 eine sehr geringe Verzugsneigung haben und dennoch Wärmeformbeständigkeiten nach HDT A oberhalb von 130°C aufweisen.

## Patentansprüche

1. Zusammensetzungen, enthaltend

   A) Polyamid 6 oder Polyamid 66,
   B) nicht-faserförmiges und nicht-geschäumtes gemahlenes Glas mit einem d90 im Bereich von 5 bis 250 µm,
   C) Glasfasern,
   D) Melamincyanurat und
   E) Titandioxid.

2. Zusammensetzungen gemäß Anspruch 1, **dadurch gekennzeichnet, dass** diese

   A) 5 bis 92,8 Gew.-% Polyamid 6 oder Polyamid 66,
   B) 5 bis 80 Gew.-% eines nicht-faserförmigen und nicht-geschäumten gemahlenen Glases mit einem d90 im Bereich von 5 bis 250 µm,
   C) 2 bis 8 Gew.-% Glasfasern,
   D) 0,1 bis 40 Gew.-% Melamincyanurat und
   E) 0,1 bis 10 Gew.-% Titandioxid,

   enthalten, mit der Maßgabe, dass die Summe aller Gewichtsprozente stets 100 ergibt.

3. Zusammensetzungen gemäß der Ansprüche 1 oder 2, **dadurch gekennzeichnet, dass** die Komponente B) zusätzlich noch mit B') mindestens einem Aminoalkyltrialkoxysilan, bevorzugt in Mengen von 0,01 Gew.-% bis 1,5 Gew.-% bezogen auf die Menge des nicht-faserförmigen und nicht-geschäumten gemahlenen Glases, beschlichtet ist.

4. Zusammensetzungen gemäß einem der Ansprüche 1 bis 3, **dadurch gekennzeichnet, dass** diese zusätzlich zu den Komponenten A), B), C), D und E) beziehungsweise A), B), B'), C), D) und E) noch F) 0,01 bis 5 Gew.-% bezogen auf die Gesamtzusammensetzung wenigstens eines Gleit- und/oder Entformungsmittels enthalten, wobei die übrigen Komponenten soweit reduziert werden, dass die Summe aller Gewichtsprozente stets 100 ergibt.

5. Zusammensetzungen gemäß einem der Ansprüche 1 bis 4, **dadurch gekennzeichnet, dass** diese zusätzlich zu den Komponenten A) bis F) oder anstelle von F) noch G) 0,01 bis 10 Gew.-% bezogen auf die Gesamtzusammensetzung wenigstens eines Laserabsorbers enthalten, wobei die übrigen Komponenten soweit reduziert werden, dass die Summe aller Gewichtsprozente stets 100 ergibt, bevorzugt einen Laserabsorber ausgewählt aus der Gruppe Antimontrioxid, Zinnoxid, Zinnorthophosphat, Bariumtitanat, Aluminiumoxid, Kupferhydroxyphosphat, Kupferorthophosphat, Kaliumkupferdiphosphat Kupferhydroxid, Antimonzinnoxid, Bismuttrioxid und Antrachinon.

6. Zusammensetzungen gemäß einem der Ansprüche 1 bis 5, **dadurch gekennzeichnet, dass** diese zusätzlich zu den Komponenten A) bis G) oder anstelle von F) und/oder G) noch H) 0,01 bis 60 Gew.-% bezogen auf die Gesamtzusammensetzung mindestens eines weiteren zum Melamincyanurat unterschiedlichen Flammschutzmittels enthalten, wobei die übrigen Komponenten soweit reduziert werden, dass die Summe aller Gewichtsprozente stets 100 ergibt.

7. Zusammensetzungen gemäß einem der Ansprüche 1 bis 6, **dadurch gekennzeichnet, dass** diese zusätzlich zu den Komponenten A) bis H) oder anstelle von F) und/oder G) und/oder H) noch die Komponente K) 0,01 bis 50 Gew.-% bezogen auf die Gesamtzusammensetzung wenigstens eines Füllstoffs verschieden von den Komponenten B) und C) enthalten, wobei die übrigen Komponenten soweit reduziert werden, dass die Summe aller Gewichtsprozente stets 100 ergibt.

8. Zusammensetzungen gemäß einem der Ansprüche 1 bis 7, **dadurch gekennzeichnet, dass** diese zusätzlich zu

den Komponenten A) bis K) oder anstelle der Komponenten F) und/oder G) und/oder H) und/oder K) noch L) 0,01 bis 20 Gew.% bezogen auf die Gesamtzusammensetzung wenigstens eines weiteren von den Komponenten D) und E) unterschiedlichen Additivs enthalten, wobei die übrigen Komponenten soweit reduziert werden, dass die Summe aller Gewichtsprozente stets 100 ergibt.

**9.** Zusammensetzungen gemäß einem der Ansprüche 1 bis 8, **dadurch gekennzeichnet, dass** das als Komponente B) einzusetzende nicht-faserförmige und nicht-geschäumte gemahlene Glas von partikelförmiger, nicht zylindrischer Gestalt ist und ein Durchmesser zu Dickenverhältnis kleiner 5, bevorzugt kleiner als 3, besonders bevorzugt kleiner 2 aufweist.

**10.** Zusammensetzungen gemäß einem der Ansprüche 1 bis 9, **dadurch gekennzeichnet, dass** das als Komponente B) einzusetzende gemahlene Glas eine Dichte im Bereich von 2400 bis 2700 $kg/m^3$ hat.

**11.** Zusammensetzungen gemäß einem der Ansprüche 1 bis 10, **dadurch gekennzeichnet, dass** das als Komponente B) einzusetzende nicht-geschäumte und nicht faserförmige gemahlene Glas nicht die für faserförmiges Glas typische Glasgeometrie mit zylindrischem oder ovalen Querschnitt mit einem Längen- zu Durchmesserverhältnis (L/D-Verhältnis) größer 5 zeigt.

**12.** Zusammensetzungen gemäß einem der Ansprüche 1 bis 11, **dadurch gekennzeichnet, dass** die Komponente B) auf Kalk-Natron-Glas, Borsilikatglas, A-Glas oder E-Glas, bevorzugt auf E-Glas basiert.

**13.** Zusammensetzungen gemäß einem der Ansprüche 1 bis 12, **dadurch gekennzeichnet, dass** als Komponente B) Glasarten eingesetzt werden, bei denen der Gehalt an $K_2O$ kleiner oder gleich 2 Gew.-% bezogen auf alle Komponenten des Glases ist.

**14.** Zusammensetzungen gemäß einem der Ansprüche 1 bis 13, **dadurch gekennzeichnet, dass** auf Komponente E) verzichtet werden kann, wenn als Komponente C) Endlosfasern mit einer Ausgangslänge L > 50 mm eingesetzt werden.

**15.** Verwendung der Zusammensetzungen gemäß einem der Ansprüche 1 bis 13 zur Herstellung von Erzeugnissen, bevorzugt von Elektrobauteilen, besonders bevorzugt FI-Schalter und Leitungsschutzschalter, ganz besonders bevorzugt Leitungsschutzschalter mit Bemessungsströmen >16 A, insbesondere bevorzugt Leitungsschutzschalter mit Bemessungsströmen >32 A, insbesondere ganz besonders bevorzugt von Leitungsschutzschaltern mit Bemessungsströmen >64 A.

**16.** Verfahren zur Herstellung von Erzeugnissen, bevorzugt von Elektrobauteilen, besonders bevorzugt FI-Schalter und Leitungsschutzschalter, ganz besonders bevorzugt Leitungsschutzschalter mit Bemessungsströmen >16 A, insbesondere bevorzugt von Leitungsschutzschaltern mit Bemessungsströmen >32 A, insbesondere ganz besonders bevorzugt von Leitungsschutzschaltern mit Bemessungsströmen >64 A durch Einsatz der Zusammensetzungen gemäß einem der Ansprüche 1 bis 13 im Spritzguss, in Extrusionsverfahren oder beim Blasformen.

Europäisches Patentamt
European Patent Office
Office européen des brevets

# EUROPÄISCHER RECHERCHENBERICHT

Nummer der Anmeldung
EP 14 16 1762

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| Y,D | EP 2 468 810 A1 (LANXESS DEUTSCHLAND GMBH [DE]) 27. Juni 2012 (2012-06-27)<br>* Absätze [0011], [0014], [0020], [0032], [0056], [0079], [0080], [0083], [0000], [0117], [0121] *<br>* Tabelle 1 *<br>----- | 1-16 | INV.<br>C08K5/3492<br>C08K7/14<br>C08K7/20<br>C08K3/40<br>C08L77/02<br>C08L77/06<br>C08K3/22 |
| Y | EP 1 762 592 A1 (CLARIANT PRODUKTE DEUTSCHLAND [DE])<br>14. März 2007 (2007-03-14) | 1-13,15,16 | |
| A | * Absätze [0029], [0046] *<br>----- | 14 | |
| A | DATABASE WPI<br>Week 201403<br>Thomson Scientific, London, GB;<br>AN 2013-P22855<br>XP002730445,<br>-& CN 103 013 104 A (KINGFA SCI&TECH CO LTD) 3. April 2013 (2013-04-03)<br>* Zusammenfassung *<br>* Beispiele *<br>----- | 1-16 | |
| | | | RECHERCHIERTE SACHGEBIETE (IPC) |
| T | FRANK M ETZLER ET AL: "Particle Size Analysis: A Comparison of Various Methods II",<br>PART. PART. SYST. CHARACT, WILEY-VCH VERLAG GMBH,<br>Bd. 14, 1. Januar 1997 (1997-01-01), Seiten 278-282, XP007919197,<br>[gefunden am 1997-01-01]<br>* das ganze Dokument *<br>----- | | C08K<br>C08L<br>D03D |
| | -/-- | | |

Der vorliegende Recherchenbericht wurde für alle Patentansprüche erstellt

| Recherchenort | Abschlußdatum der Recherche | Prüfer |
|---|---|---|
| München | 27. Februar 2015 | Behm, Sonja |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument

& : Mitglied der gleichen Patentfamilie, übereinstimmendes Dokument

EPO FORM 1503 03.82 (P04C03)

Europäisches Patentamt
European Patent Office
Office européen des brevets

# EUROPÄISCHER RECHERCHENBERICHT

Nummer der Anmeldung
EP 14 16 1762

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| Y<br><br><br><br><br><br><br><br>A | DATABASE WPI<br>Week 201364<br>Thomson Scientific, London, GB;<br>AN 2013-P51243<br>XP002736534,<br>-& CN 103 044 912 A (JIANGSU JINFA TECHNOLOGY NEW MATERIAL CO)<br>17. April 2013 (2013-04-17)<br>* Zusammenfassung *<br>* Beispiele *<br>----- | 14<br><br><br><br><br><br><br><br>1-13,15,16 | |
| | | | RECHERCHIERTE SACHGEBIETE (IPC) |

Der vorliegende Recherchenbericht wurde für alle Patentansprüche erstellt

| Recherchenort | Abschlußdatum der Recherche | Prüfer |
|---|---|---|
| München | 27. Februar 2015 | Behm, Sonja |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument
& : Mitglied der gleichen Patentfamilie, übereinstimmendes Dokument

EPO FORM 1503 03.82 (P04C03)

Europäisches Patentamt
European Patent Office
Office européen des brevets

Nummer der Anmeldung

EP 14 16 1762

## GEBÜHRENPFLICHTIGE PATENTANSPRÜCHE

Die vorliegende europäische Patentanmeldung enthielt bei ihrer Einreichung Patentansprüche, für die eine Zahlung fällig war.

☐ Nur ein Teil der Anspruchsgebühren wurde innerhalb der vorgeschriebenen Frist entrichtet. Der vorliegende europäische Recherchenbericht wurde für jene Patentansprüche erstellt, für die keine Zahlung fällig war, sowie für die Patentansprüche, für die Anspruchsgebühren entrichtet wurden, nämlich Patentansprüche:

☐ Keine der Anspruchsgebühren wurde innerhalb der vorgeschriebenen Frist entrichtet. Der vorliegende europäische Recherchenbericht wurde für die Patentansprüche erstellt, für die keine Zahlung fällig war.

## MANGELNDE EINHEITLICHKEIT DER ERFINDUNG

Nach Auffassung der Recherchenabteilung entspricht die vorliegende europäische Patentanmeldung nicht den Anforderungen an die Einheitlichkeit der Erfindung und enthält mehrere Erfindungen oder Gruppen von Erfindungen, nämlich:

Siehe Ergänzungsblatt B

☒ Alle weiteren Recherchengebühren wurden innerhalb der gesetzten Frist entrichtet. Der vorliegende europäische Recherchenbericht wurde für alle Patentansprüche erstellt.

☐ Da für alle recherchierbaren Ansprüche die Recherche ohne einen Arbeitsaufwand durchgeführt werden konnte, der eine zusätzliche Recherchengebühr gerechtfertigt hätte, hat die Recherchenabteilung nicht zur Zahlung einer solchen Gebühr aufgefordert.

☐ Nur ein Teil der weiteren Recherchengebühren wurde innerhalb der gesetzten Frist entrichtet. Der vorliegende europäische Recherchenbericht wurde für die Teile der Anmeldung erstellt, die sich auf Erfindungen beziehen, für die Recherchengebühren entrichtet worden sind, nämlich Patentansprüche:

☐ Keine der weiteren Recherchengebühren wurde innerhalb der gesetzten Frist entrichtet. Der vorliegende europäische Recherchenbericht wurde für die Teile der Anmeldung erstellt, die sich auf die zuerst in den Patentansprüchen erwähnte Erfindung beziehen, nämlich Patentansprüche:

☐ Der vorliegende ergänzende europäische Recherchenbericht wurde für die Teile der Anmeldung erstellt, die sich auf die zuerst in den Patentansprüchen erwähnte Erfindung beziehen (Regel 164 (1) EPÜ).

Europäisches Patentamt
European Patent Office
Office européen des brevets

# MANGELNDE EINHEITLICHKEIT DER ERFINDUNG ERGÄNZUNGSBLATT B

Nummer der Anmeldung

EP 14 16 1762

Nach Auffassung der Recherchenabteilung entspricht die vorliegende europäische Patentanmeldung nicht den Anforderungen an die Einheitlichkeit der Erfindung und enthält mehrere Erfindungen oder Gruppen von Erfindungen, nämlich:

1. Ansprüche: 1-13, 15, 16

Zusammensetzungen, enthaltend A) Polyamid 6 oder Polyamid 66, B) nicht-faserförmiges und nicht-geschäumtes gemahlenes Glass mit einem d90 im Bereich von 5 bis 250 um, und einer Länge im Bereich von 0,01 bis 0,5 mm, C) Glasfasern, D) Melamincyanurat und E) Titandioxid

---

2. Anspruch: 14

Zusammensetzungen wie in Erfindung 1, mit dem Unterschied, dass die Zusammensetzungen kein Titandioxid enthalten und dass die Glasfasern Endlosfasern mit einer Ausgangslänge L>50 mm sind

---

**ANHANG ZUM EUROPÄISCHEN RECHERCHENBERICHT ÜBER DIE EUROPÄISCHE PATENTANMELDUNG NR.** EP 14 16 1762

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

27-02-2015

| Im Recherchenbericht angeführtes Patentdokument | Datum der Veröffentlichung | Mitglied(er) der Patentfamilie | Datum der Veröffentlichung |
|---|---|---|---|
| EP 2468810 A1 | 27-06-2012 | CN 102585490 A | 18-07-2012 |
| | | EP 2468809 A1 | 27-06-2012 |
| | | EP 2468810 A1 | 27-06-2012 |
| | | ES 2475146 T3 | 10-07-2014 |
| | | HR P20140728 T1 | 29-08-2014 |
| | | JP 2012132010 A | 12-07-2012 |
| | | KR 20120092001 A | 20-08-2012 |
| | | US 2012165439 A1 | 28-06-2012 |
| | | US 2013296468 A1 | 07-11-2013 |
| EP 1762592 A1 | 14-03-2007 | DE 102005041966 A1 | 08-03-2007 |
| | | EP 1762592 A1 | 14-03-2007 |
| | | JP 2007070627 A | 22-03-2007 |
| | | US 2007072967 A1 | 29-03-2007 |
| CN 103013104 A | 03-04-2013 | KEINE | |
| CN 103044912 A | 17-04-2013 | KEINE | |

EPO FORM P0461

Für nähere Einzelheiten zu diesem Anhang : siehe Amtsblatt des Europäischen Patentamts, Nr.12/82

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

### In der Beschreibung aufgeführte Patentdokumente


- EP 2468810 A1
- DE 102011084519 A1
- WO 2009003976 A1
- DE 4236122 A
- DE 2035390 A
- US 3644574 A
- DE 2248242 A
- GB 1409275 A
- US 4937285 A
- DE 3704657 A
- US 4859740 A
- DE 3704655 A
- US 4861831 A
- DE 3631540 A
- US 4806593 A
- DE 3631539 A
- US 4812515 A


### In der Beschreibung aufgeführte Nicht-Patentliteratur


- Polyamide verstanden. Die Kunststoffe und ihre Eigenschaften. 1998, 14
- Chemie Ingenieur Technik. Wiley-VCH Verlags GmbH, Marz 2000, vol. 72, 273-276
- **CHRIS DEARMITT.** Additives Feature, Mineral Fillers. *COMPOUNDING WORLD,* Februar 2011, 28-38, www.compoundingworld.com
- *Gemäß Kunststoffe,* 2008, vol. 8, 119-121
- **ULLMANN.** Enzyklopädie der Technischen Chemie. 1980, vol. 19, 280 ff
- Technische Thermoplaste 4. Polyamide. Carl Hanser Verlag, 1998, 311-314
- Verarbeitung von Langfaser-verstärkten Thermoplasten im direkten Plastifizier-/Pressverfahren. **K. BRAST.** Dissertation. Rheinisch-Westfälische Technische Hochschule Aachen, 2001, 30-33
- Kunststoff-Handbuch 3/4, Polyamide. Carl Hanser Verlag, 1998, 374-384
- **THIELEN ; HARTWIG ; GUST.** Blasformen von Kunststoffhohlkörpern. Carl Hanser Verlag, 2006, 15-17
- **THIELEN ; HARTWIG ; GUST.** Blasformen von Kunststoffhohlkörpern. Carl Hanser Verlag, 2006, 117-122
- **THIELEN, HARTWIG ; GUST.** Blasformen von Kunststoffhohlkörpern. Carl Hanser Verlag, 2006, 123